(19) **Europäisches Patentamt**
**European Patent Office**
**Office européen des brevets**

(11) **EP 4 260 060 B1**

(12) **EUROPEAN PATENT SPECIFICATION**

(45) Date of publication and mention
of the grant of the patent:
**08.04.2026 Bulletin 2026/15**

(21) Application number: **21824052.1**

(22) Date of filing: **03.12.2021**

(51) International Patent Classification (IPC):
**G01N 30/86** (2006.01)  **G01N 27/447** (2006.01)
**G01N 30/16** (2006.01)

(52) Cooperative Patent Classification (CPC):
**G01N 30/8693; G01N 27/44743; G01N 30/16;**
G01N 2030/8831

(86) International application number:
**PCT/IB2021/061322**

(87) International publication number:
**WO 2022/123412 (16.06.2022 Gazette 2022/24)**

(54) **MECHANISTIC ION-EXCHANGE CHROMATOGRAPHY MODEL CALIBRATION**

KALIBRIERUNG EINES MECHANISTISCHEN IONENAUSTAUSCHCHROMATOGRAFIEMODELLS

ÉTALONNAGE MÉCANISÉ DE MODÈLE DE CHROMATOGRAPHIE PAR ÉCHANGE D'IONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.12.2020 US 202063123170 P**

(43) Date of publication of application:
**18.10.2023 Bulletin 2023/42**

(73) Proprietor: **Amgen Research (Munich) GmbH
81477 München (DE)**

(72) Inventor: **GLASER, Juliane Dorothea
81477 Munich (DE)**

(74) Representative: **J A Kemp LLP
80 Turnmill Street
London EC1M 5QU (GB)**

(56) References cited:
• **KUMAR VIJESH ET AL: "Mechanistic modeling of
ion-exchange process chromatography of
charge variants of monoclonal antibody
products", JOURNAL OF CHROMATOGRAPHY
A, ELSEVIER, AMSTERDAM, NL, vol. 1426, 21
November 2015 (2015-11-21), pages 140 - 153,
XP029345846, ISSN: 0021-9673, DOI: 10.1016/
J.CHROMA.2015.11.062**
• **SHEKHAWAT LALITA K. ET AL: "An overview of
mechanistic modeling of liquid
chromatography", PREPARATIVE
BIOCHEMISTRY AND BIOTECHNOLOGY, vol. 49,
no. 6, 20 May 2019 (2019-05-20), US, pages 623 -
638, XP055849496, ISSN: 1082-6068, DOI:
10.1080/10826068.2019.1615504**
• **ROSA MA MONTESINOS-CISNEROS ET AL:
"Breakthrough performance of linear-DNA on
ion-exchange membrane columns",
BIOPROCESS AND BIOSYSTEMS
ENGINEERING, SPRINGER, BERLIN, DE, vol. 29,
no. 2, 13 June 2006 (2006-06-13), pages 91 - 98,
XP019428472, ISSN: 1615-7605, DOI: 10.1007/
S00449-006-0055-2**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF THE DISCLOSURE**

The present disclosure generally relates to calibration of a mechanistic ion-exchange chromatography model for a chromatography machine.

**BACKGROUND**

The biopharmaceutical industry has made great strides in the field of digital biomanufacturing over the last several decades with the introduction of powerful processors and large hard drives capable of storing and interpreting large amounts of data. Digital tools that aid in process development and analytics have been evolving rapidly to improve process performance and efficiency. Application of predictive models allow for in silico exploration of design spaces during process development and improved control strategies in real time in a manufacturing environment.

Chromatography is a method used for molecule separation and purification during the downstream processing of biomolecules, and is an important step in the purification of biopharmaceuticals. Using chromatography, solutions of biomolecules can be purified and concentrated using porous packed beds that separate different molecules based on their differences in mass, size, or charge. Ion-exchange (IEX) chromatography is a purification step based on ionic interactions between chromatographic material and molecules, and involves using charged sites on the surface of the packing material to adsorb biomolecules based on charged sites on their surface. Cation-exchange (CEX) chromatography is an ion-exchange chromatography mode that uses negatively charged sites on the surface of the adsorbent to adsorb biomolecules based on positively charged sites on their surface. Adsorbed biomolecules can be eluted by decreasing the molecules' surface affinity through the usage of a buffer solution of increased ionic strength.

The Quality by Design (QbD) approach described by the U.S. Food and Drug Administration (FDA) in 2004, introduces the concept of building product quality requirements into the production process. In the following years, the International Conference on Harmonization (ICH) approved the QbD approach and introduced guidelines defining systematic approaches and scientific principles for drug development processes.

Next to regulatory scrutiny requirements for biopharmaceutical process development of CEX steps, technical challenges also occur, making technical transfers to larger scales, process improvements, and process characterizations resource intensive tasks.

Accelerated and strict timelines hardly leave room for a thorough exploration of the process design space to find process parameters allowing for maximal yield and purity while meeting strict constraints for process robustness and maximal molecule recovery. Processes developed under such conditions in early stages for first in human (FIH) studies meet all required constraints at that point but might be wanting in scalability when later in time demands on quality, quantity, or cost change.

Iterative experimentation requiring high resource levels can be the consequence in order to identify critical process parameters that reduce material consumption as well as increase process performance, such as yield and molecule purity. Methods that can be integrated into early process development stages that enable targeted experimentation around most promising process parameter ranges can help to guide to more optimal processes in terms of performance and scalability under accelerated timeline conditions.

Mechanistic models are a tool used for knowledge-based process development, process optimization, predictive process control, and gain of process understanding of chromatographic separation processes. Mechanistic models provide predictions of important process outputs and process performance indicators over a large process range. In particular, mechanistic CEX chromatography modeling is a useful tool based on first principles to describe the transport and elution behavior of molecules and predict the behavior of a chromatography step. The application of a CEX chromatography model in process development to explore the design space of process parameters, such as loading factors or elution gradients, can reduce the effort of iterative experimentation. Furthermore, mechanistic modeling provides the opportunity to gain insight on the mechanisms affecting the separations of a protein therapeutic and its impurities. This knowledge can be used to inform decision making during development and to optimize product quality and process performance. Essentially, mechanistic modeling provides a useful, science-based tool for process design and optimization. In one example, mechanistic CEX chromatography modeling can be utilized to make decisions on CEX step parameters such as gradient slope, collection criteria, and load factor. However, mechanistic models require prior knowledge and a thorough calibration process in order to provide enough predictivity in small- and large-scale separation processes. In particular, a mechanistic model requires a well-defined mathematical description of each process step. There are a number of studies using and suggesting workflows for mechanistic models for process optimization, process investigation and performance assessment or model-based control.

There are a number of models available that can describe chromatographic steps of biopharmaceuticals. One of the first mathematical descriptions of chromatography processes described adsorption of $CO_2$ to coal and a silica gel with empirical equations. Since then, chromatography models have been developed further to include many possible contributions to mass transfer kinetics based on first principles. An important step is the development of the general rate model (GRM). The GRM describes combinations of kinetic transport phenomena, such as forced convection (by pumping), and molecule diffusion, and adsorption, in liquid chromatography systems. That allows for more detailed descriptions of transport phenomena in chromatographic columns than simplified versions before (e.g. ideal model and Thomas model). For molecules that are small in comparison to the pore size of the chromatographic material the lumped pore model (POR) can be a suitable simplification of the GRM.

The adsorption of biomolecules to the adsorbent can be described by adsorption models. Here too, vast numbers of models are available that have proven to be applicable to chromatography. An early adsorption model is the Langmuir model that allows for concentration-dependent adsorption to surfaces with finite capacity. A further milestone in modeling adsorption behavior is the steric mass-action (SMA) model. Its equations allow for the influence of ionic strength, steric shielding of binding sites, and affinity of biomolecules to chromatographic material caused by ionic interactions on adsorption behavior of molecule mixtures. In a number of studies the successful application of the SMA model to ion-exchange chromatography has been shown. Even under non-ideal process conditions, such as high column loading, detailed models are available that can describe non-intuitive adsorption behavior. The model development activities for industrial chromatography steps can fall back on the transport and adsorption models that already exist. However, before application, mechanistic models need to be calibrated. That is, suitable model parameters need to be identified, such that the model explains the desired processes.

However, the calibration process - i.e., model development and estimation of the model parameters - is still a very time-consuming step.

That is, model parameters generally can be obtained by measuring, such as using optical microscopy to determine pore transport coefficients. However, taking direct measurements of model parameters is often not possible or very laborious, hence recursive parameter estimation is a method often used in chromatography modeling.

In addition to the influence of competitive adsorption and ionic strength, the mass transfer in the extra column volume affects the absolute elution time and the shape of peaks in simulated chromatograms. Moreover, the configuration of tubing, valves, or mixing chambers impacts the retention time of each component. During adsorption, parameter estimation involves using a recursive method over time that passes from the start of elution until a respective eluted component is reflected in the adsorption parameter. Hence, parameters estimated without considering the extra column volume are scale dependent and might not be suitable for larger or smaller system scales or varying system configuration. This effect can have a large impact on the chromatogram especially when the column size is small compared to the extra column volume. However, in many cases, this effect has not been taken into consideration when estimating adsorption model parameters.

Investigating scale up is an application of ion exchange chromatography models that has been investigated before. One main take away of the findings in this field is that the mass transfer coefficients are dependent on the flow velocity and therefore need to be adapted for the flow velocity.

Studies have compared model calibration methods for parameter identification of an SMA adsorption model and found the reverse method more than adequate for that purpose. In one example, adsorption model parameters may be identified using neural networks, which, after a training period for the neural network, accelerates the parameter identification in comparison to the reverse chromatogram fitting. A robust model calibration workflow involves a set of 14 experiments is suggested to calibrate a multi-component SMA model for a bispecific antibody. Those 14 experiments are used for the calibration of the adsorption model and added to that experiments for characterizing the column and extra column characteristics are required. Based on this workflow, the value of the mechanistic model for the investigation of process robustness investigation may be demonstrated.

However, a description about how transport behavior in the extra column volume, that is inherent to the chromatographic equipment, is considered in the calibration workflow is not available. Many physical processes influence the chromatographic behavior of a molecule. Next to the influence of competitive adsorption and ionic strength the mass transfer in the extra column volume affects the absolute elution time and the shape of peaks in simulated chromatograms. The configuration of tubing, valves, or mixing chambers impacts the absolute retention time of each component. As a consequence, during adsorption parameter estimation using a recursive method the time that goes by from elution start until a respective component eluted will affect the estimated value of the adsorption model parameters. Hence, parameters estimated without considering the extra column volume are scale dependent and might not be suitable for larger or smaller system scales or varying system configuration. This effect can have a large impact on the chromatogram especially when the column size is small compared to the extra column volume. The importance of a proper extra column volume representation has been demonstrated by earlier publications. However, in many contributions it has not been addressed how this effect can be considered in the model calibration workflow.

In the interest of time and effort in industrial process development, it is favorable to reduce the number of additional experiments required for model calibration to be as few as possible. Kumar, V., et al., "Mechanistic modeling of ion-exchange process chromatography of charge variants of monoclonal antibody products", 2015, Journal of Chromatography A; Shekhawat, L. K., et al., "An overview of mechanistic modeling of liquid chromatography", 2019, Preparative Biochemistry and Biotechnology; and Montesinos-Cisneros, R. M., et al., "Breakthrough performance of linear-DNA on ion-exchange membrane columns", 2006, Bioprocess and Biosystems Engineering disclose background art.

## SUMMARY

The present disclosure provides a workflow for CEX model calibration using a minimal set of experiments. The model provided by the present disclosure takes the mass transfer in the extra column volume into account, and involves a model sequence that entails a combination of fitted dead volume models prior to a chromatography column and models that are set-up only from geometric values of tubing after a chromatography column. Furthermore, in the model provided by the present disclosure, the model input parameters reflecting the mass transfer and those reflecting molecule-specific adsorption behavior are determined in a decoupled manner. The present disclosure demonstrates that the adsorption parameter can be scaled across process size, and demonstrates a sufficient predictive quality for scale-up process runs. Advantageously, the present disclosure provides a chromatography model calibration approach with increased model accuracy and agility.

The calibration is structured in three parts for a sequential parameter estimation that decouples parts of the transport model and adsorption model from each other. First, a unit-operation representation of a chromatography skid) and its transport parameters is identified. Next, a transport model for the packed bed is identified. Finally, adsorption model parameters are estimated.

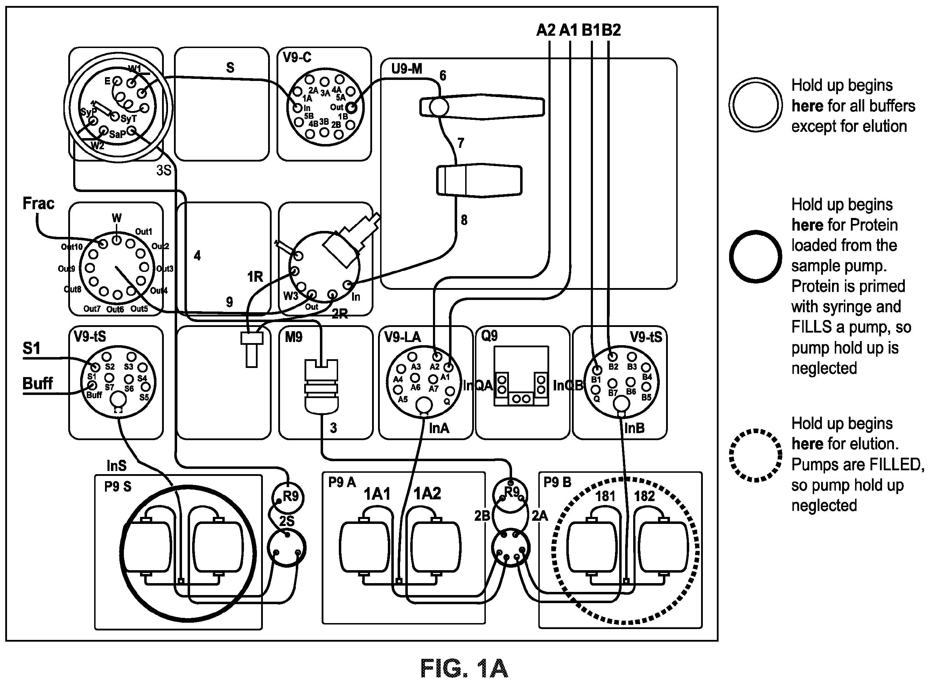

FIG. 1A illustrates an example flow path representation generally used in chromatographic skids and machines, such as the ÄKTA™ Avant. As shown in FIG. 1A, there are varying dead volumes prior to the column. Since this dead volume influences the peak position relative to the elution start point, the dead volume needs to be accounted for in the model as precisely as possible to decouple this effect from the adsorption behavior that also impacts the peak position.

Possible representations range from simple time shifts to mechanistic representations of the build-in tubing and valve volume. For a BiTE® (bispecific T-cell engager) antibody construct a combination of a DPFR model and a CSTR model is used to represent the dead volume prior to the column. The dead volume residing from column outlet to UV and conductivity sensor is represented by DPFR models as well.

A combination of tubing models and valve models is used to represent the flow path from each sample pump to UV sensor and from inlet pump to conductivity sensor. Both flow pathways are a combination of a fitted DPFR model and a CSTR model prior to the column and a DPFR model set-up from geometric specifications provided by the vendor. After identification of the separate model parts for the column model the two representations of the dead volume of the inlet flow path and the sample flow path are combined and put in a more complex model. Two DPFR models subsequent to the column are specified by tubing diameter and length specified by vendor. Only the dispersion coefficient of those two DPFR models is set to the estimated value for the DPFR prior to the column.

The specific sequence of steps involves first obtaining geometric values of the tubing after the column (tubing diameter, length), e.g., by measurement or based on vendor specifications, and then running experiments that feed a tracer molecule into the system from the desired location. Next, a sequence of DPFR - CSTR - DPFR model is set up, with the DPFR model after the column specified according to the geometric values of the specific tubing. That is, while the geometric specifics of this DPFR after the column are fixed, the parameter specifying the dispersion properties of the DPFR is not fixed, and is estimated together with the properties of the DPFR and CSTR before the column. In total, the estimation includes estimating geometric parameters of DPFR and CSTR before column, and transport coefficients, such as dispersion, of DPFR before and after column. The parameters that are not included in the estimation are the geometric parameters of DPFR after the column. This step is performed for both the sample path flow (blue in FIG. 1A) and inlet flow path (green in FIG. 1A). When all transport parameters are estimated, binding parameters can be estimated. As many components in the model as peaks should be simulated by the model may be included. Then, parameters for each of the modeled components may be estimated. The range of the estimated parameters may be used for including more components that form one or more of the chromatogram peaks, and the binding parameters may be estimated again using tight boundaries for the parameters.

The first innovation in this sequence lies in specifying the DPFR model after the column according to the geometric values of the specific tubing. This entails that a combination of fitted models and models that are set up based on geometric specifications are used to identify the level of transport effects that hit the column at its beginning. Accordingly, the time that the point sample and the elution buffer hit the column may be identified more accurately than lumping together both flow pathways prior to the column and subsequent to the column without running more complex bypass experiments that separate the paths. Additionally, using the methods provided herein, it is possible separate the transport behavior of the buffer from the transport behavior of the molecule solution.

In prior art, the focus of model-based process development lies on how the model supports process design and optimization. The model calibration procedure is often not described. If there is a focus on model calibration, most prior art involves new ways to estimate the adsorption parameter, but not new ways to estimate the dead volume prior to the column.

A second innovation in this sequence is that the adsorption model parameters are roughly estimated using a model with a reduced number of components. When this step is concluded, more components are added to the model. This is necessary for BiTEs® and often antibodies as there are several molecule species that elute in such close proximity that their UV sum signal appears as one peak. Now, this more complex model needs to be re-calibrated with a higher number of components, which results in a much larger number of estimated adsorption parameters. However, due to the previously roughly estimated adsorption parameters from the less complex model, a smaller parameter space can be applied to the parameter estimation this time, which speeds up the estimation procedure.

Decoupling transport effects and adsorption effects on the chromatogram enables more accurate chromatography models. Furthermore, the models are more flexible regarding their domain of application. That means that as long as the resin is the same, the adsorption model parameters can remain the same while other process specifics change. This is an insight that is often not practiced. However, it enables a shorter model calibration procedure, i.e., compared to performing new model calibrations every time a process is changed. Model-based process development can benefit from this speed improvement. Furthermore, the models are more accurate compared to those where transport effects are difficult to distinguish from the adsorption parameters.

The method provided herein is more flexible and more accurate than prior methods for modeling dead volumes in chromatography skids and machines, such as shifting the point of elution start according to the dead volume, or determining the dead volume based on bypass experiments. Both prior methods include the dead volume after the column outlet as dead volume accounted for prior to the column.

Ultimately, the method provided herein allows estimation of adsorption parameters with less influence from transport effects. This approach decouples transport and adsorption effects on the chromatogram more effectively than previous methods. This is beneficial when process specifications are changed that influence the transport of the molecules. This is the case in scale-up applications. In such a case the impact of scaled-up tubing, flow rates, etc. can be accounted for in a separate part of the model and the adsorption model remains the same and does not have to be calibrated again under the changed process conditions.

In an aspect, a method is provided, comprising: obtaining, for a chromatography machine including a first dispersed plug flow reactor (DPFR) and a continuous stirred tank reactor (CSTR) prior to a column, and a second DPFR after the column, geometric measurements associated with the second DPFR; generating, by a processor, transport model parameters for a transport model associated with the second DPFR based on the geometric measurements; feeding a tracer molecule into the chromatography machine; capturing one or more tracer molecule measurements based on the tracer molecule traveling through the chromatography machine; and estimating, by the processor, based on the transport model associated with the second DPFR and the one or more tracer molecule measurements based on the tracer molecule traveling through the chromatography machine, one or more transport model parameters for a transport model associated with the first DPFR and the CSTR.

In some examples, the method may include feeding an experimental sample into the chromatography machine; capturing one or more experimental measurements based on the experimental sample traveling through the chromatography machine; and estimating, by the processor, based on the one or more experimental measurements based on the experimental sample traveling through the chromatography machine, the estimated one or more transport model parameters for the transport model associated with the first DPFR and the CSTR, and the transport parameters for the transport model associated with the second DPFR, one or more adsorption model parameters for an adsorption model associated with the experimental sample.

Moreover, in some examples, the geometric measurements may include tubing diameter measurements and tubing length measurements associated with the second DPFR.

Furthermore, in some examples, the one or more tracer molecule measurements are captured based on a chromatogram associated with the tracer molecule traveling through the chromatography machine. Similarly, in some examples, the one or more experimental measurements are captured based on a chromatogram associated with the experimental sample traveling through the chromatography machine.

Additionally, in some examples, the method may include identifying, by the processor, the experimental sample based on the adsorption model associated with the experimental sample.

Moreover, in some examples, the estimating the one or more adsorption model parameters for the adsorption model associated with the experimental sample may be a first estimating of a first one or more adsorption parameters for a first adsorption model associated with the experimental sample, and the method may further include a second estimating, by the processor, of a second one or more adsorption parameters for a second adsorption model associated with the experimental sample based on a range associated with the first one or more binding parameters for the first adsorption model associated with the experimental sample. Additionally, in some examples, the method may include identifying, by the processor, the experimental sample based on the second adsorption model associated with the experimental sample.

Furthermore, in some examples, the first DPFR and a CSTR prior to the column, and the second DPFR after the column are part of an inlet flow path of the chromatography machine, and wherein the chromatography machine further includes a sample flow path having a first DPFR and a CSTR prior to a sample flow path column, and a second DPFR after the sample flow path column, and the steps of the method are further performed for the first DPFR and the CSTR prior to the sample flow path column, and the second DPFR after the sample flow path column.

Additionally, in some examples, the experimental sample is a first experimental sample, and the method may further include feeding a second experimental sample into the chromatography machine; capturing one or more second experimental measurements based on the second experimental sample traveling through the chromatography machine; and estimating, by the processor, based on the one or more second experimental measurements based on the second experimental sample traveling through the chromatography machine, the estimated one or more transport model parameters for the transport model associated with the first DPFR and the CSTR, and the transport parameters for the transport model associated with the second DPFR, one or more adsorption model parameters for an adsorption model associated with the second experimental sample. For instance, in some examples, the second experimental sample is distinct from the first experimental sample.

Moreover, in some examples, the transport model parameters include one or more of: dispersion coefficient in DPFR, volume of DPFR, cross-section area of DPFR, and volume of CSTR. Furthermore, in some examples, the adsorption model parameters include one or more of: adsorption coefficient, desorption coefficient, characteristic charge, and shielding factor.

Additionally, in some examples, the method further includes estimating, by the processor, based on the transport model associated with the first DPFR and the CSTR, the transport model associated with the second DPFR, and the one or more tracer molecule measurements based on the tracer molecule traveling through the chromatography machine, one or more column-specific transport model parameters for a column-specific transport model associated with the column of the chromatography machine. Moreover, in some examples, the column-specific transport model parameters include one or more of: column porosity and column dispersion.

Furthermore, in some examples, the method further includes estimating, by the processor, based on the column-specific transport model, the transport model associated with the first DPFR and the CSTR, the transport model associated with the second DPFR, and the one or more tracer molecule measurements based on the tracer molecule traveling through the chromatography machine, one or more resin transport parameters for a resin transport model associated with resin particles of the chromatography machine. Additionally, in some examples, the resin transport parameters include one or more of: film transport coefficient for each component and pore porosity.

Moreover, in some examples, estimating one or more adsorption model parameters for an adsorption model associated with the experimental sample is further based on one or more of a column-specific transport model or a resin transport model.

Additionally, in some examples, the tracer molecule is dextran. In some examples, the tracer molecule is NaCl. Furthermore, in some examples, the tracer molecule is a DNA molecule. Moreover, in some examples, the tracer molecule is a nanoparticle.

## BRIEF DESCRIPTION OF THE DRAWINGS

FIG. 1A illustrates a flow path representation of a chromatography machine (e.g., such as the ÄKTA™ Avant). As shown in FIG. 1A, flow paths from different locations depending on line priming procedures indicate varying time points for when sample or elution buffer enters the column.

FIG. 1B illustrates an example of how the mobile phase travels through a packed bed column.

FIG. 1C illustrates a visualization of the steric mass action model, including parameter meaning.

FIG. 2 illustrates a graph of a sum of square difference (SSD) alignment issue using synthetic data, in accordance with some examples.

FIG. 3 illustrates a graph of a comparison of standard position penalty and initially reduced position penalty metrics, in accordance with some examples.

FIG. 4 illustrates an exemplary stage-wise approach for model development.

FIG. 5 illustrates a diagram of flow paths used for gradient elution, in accordance with some examples.

FIG. 6 illustrates a chromatography machine system representation for a CEX model. Unit operation sequence of a general model construction; Dispersed plug flow reactor (DPFR) and continuous stirred tank reactor (CSTR) represent peak delay and peak broadening that is caused in the system not including the column (valves, sensors, mixing chamber). Salt and molecules might experience different tubing or valve systems, so the parameters associated with those unit operations might vary between proteins and salt species.

FIGS. 7A and 7B illustrate calibration of pre-column models for transport within the chromatography skid. FIG. 7A illustrates dextran tracer breakthrough from the sample pump, while FIG. 7B illustrates NaCl tracer from the inlet pump.

FIGS. 8A, 8B, and 8C illustrate calibration of column transport model parameters. FIG. 8A illustrates dextran breakthrough tracer (non-pore penetrating), FIG. 8B illustrates dextran pulse tracer (non-pore penetrating), and FIG. 8C illustrates FVIP for a BiTE® (bispecific T-cell engager) antibody construct breakthrough (pore-penetrating).

FIGS. 9A and 9B illustrate a comparison of experimental and simulated chromatograms and fractionation data sets under elution conditions. FIG. 9A illustrates a best fit for a 5mM/CV gradient run, while FIG. 9B illustrates a best fit for a 11 mM/CV gradient run.

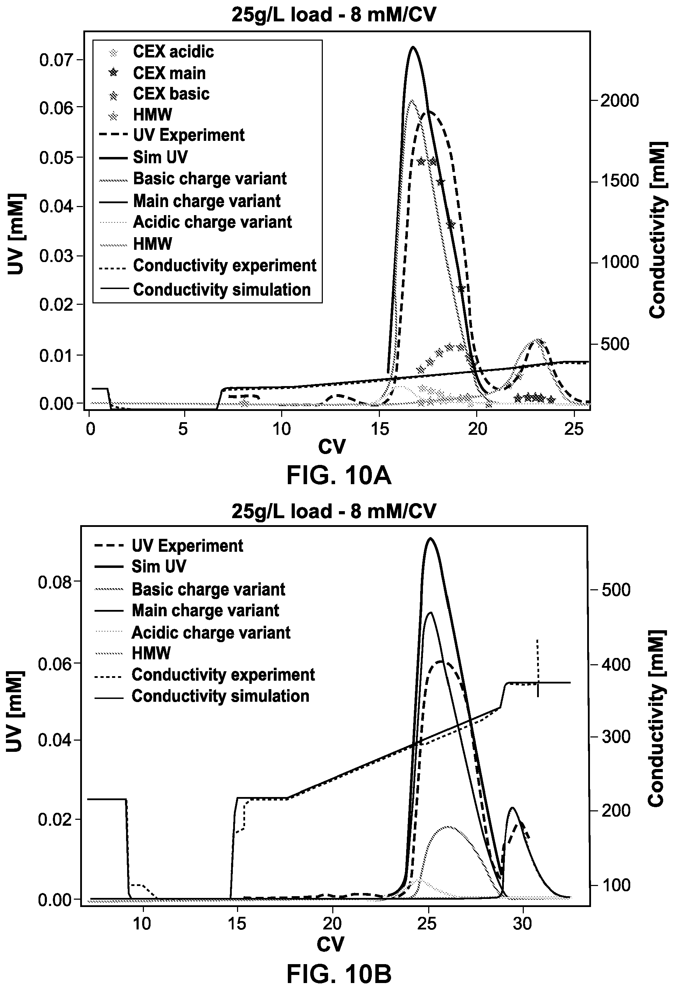

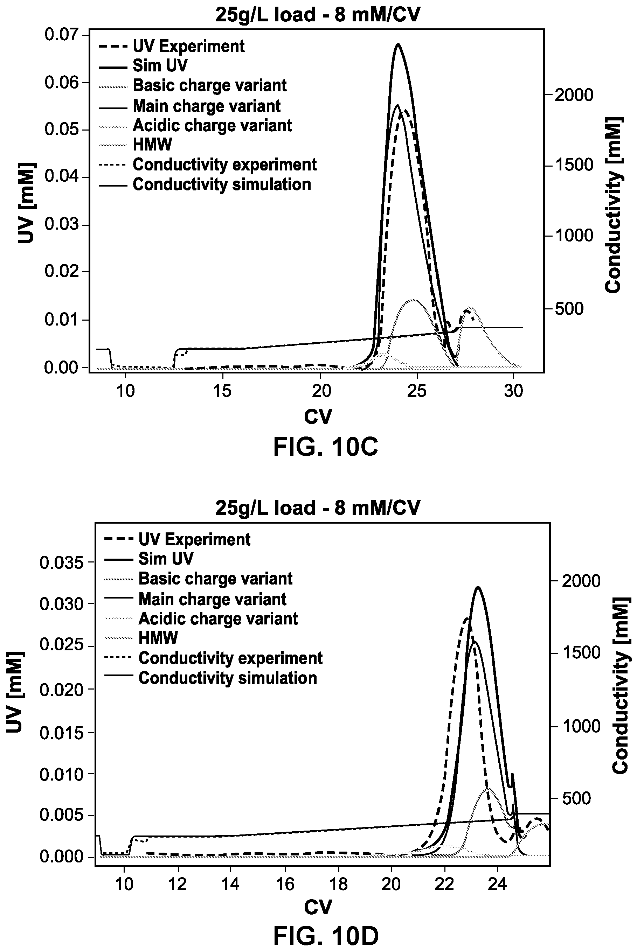

FIGS. 10A, 10B, 10C, and 10D illustrate model validation on process scale experiments with varying load factor, gradient, and stop collect criteria. FIG. 10A illustrates model validation for 8mM/CV gradient and 25g/L load factor on a bench top scale column. FIG. 10B illustrates model validation for 8mM/CV gradient and 25g/L load factor on process scale with 30% stop collect criteria. FIG. 10C illustrates model validation for 8mM/CV gradient and 15 g/L load factor on process scale with 45% stop collect criteria. FIG. 10D illustrates model validation for 8mM/CV gradient and 5g/L load factor on process scale with 30% stop collect criteria.

FIG. **11** illustrates a flow diagram of an exemplary method, in accordance with some examples provided herein.

## DETAILED DESCRIPTION

### Definitions

As used herein, "chromatography" refers to a method for molecule separation and purification in a downstream process.

As used herein, "ion-exchange chromatography" ("IEX") refers to a chromatography step based on ionic interactions between molecule and chromatographic material.

As used herein, "cation-exchange" ("CEX") refers to a chromatography step based on cation interactions between molecule and chromatographic material.

As used herein, "anion-exchange" ("AEX") refers to a chromatography step based on anion interactions between molecule and chromatographic material.

As used herein, "ÄKTA™" refers to the product name of Cytiva™ chromatography machines.

As used herein, "dispersed plug-flow reactor" ("DPFR") refers to a cylindrical tube with convective laminar flow with a plug-flow profile rather than a mild slope flow profile.

As used herein, "continuous stirred tank reactor" ("CSTR") refers to a tank reactor filled with fluid that is perfectly mixed.

As used herein, "mixing chamber" refers to a small tank (~1-10 mL) for mixing buffer solutions in a chromatography machine, such as the ÄKTA™.

As used herein, "valve" refers to a valve that couples all parts in a chromatography machine such as the ÄKTA™. These valves can switch between numerous inputs and outputs and have a small volume (~1-1000 $\mu$L).

As used herein, "model calibration" refers to a procedure to estimate unknown model parameters.

As used herein, "adsorption" refers to the process by which a solid holds molecule of a gas or liquid or solute as a thin film.

As used herein, "dead volume" refers to voids within the chromatography machine that are filled with liquid.

As used herein, "line priming" refers to filling tubing/valves prior to the process start with necessary fluid (e.g., buffers).

As used herein, "fitting" refers to the procedure of recursively estimating unknown model parameters by comparing the simulation to measured values.

As used herein, "elution" refers to the process of removing adsorbed molecules from chromatographic material.

## Theory

Generally the column model provided herein describes important transport and adsorption effects of counterions and molecules present in the column in solute and adsorbed state. A variety of adsorption models can be selected, but the most important adsorption model describes how salt-ions as mobile phase modulators are influencing the adsorption kinetics of molecules. Such processes are described on a seconds time scale, and on micro meter and meter length scales. A simplified general rate model (GRM) and the steric mass-action model are used to simulate the transport and elution behavior of acidic, main, and basic charge variants of target molecule and high molecular weight (HMW) impurity species.

Transport Model

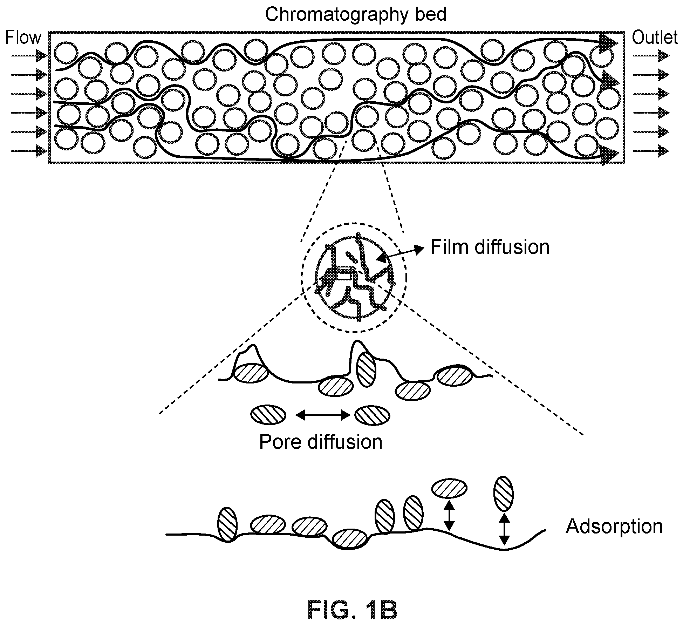

As shown in FIG. 1B, the mobile phase travels through a packed bed column with length L. The movement can be described by the volumetric flow rate, the column cross-sectional area, and the column porosity (void ratio between the packed beads). This movement is forced convection and is described by a convection term along the column length z. There are effects in the interstitial volume *l* (void between beads in liquid mobile phase), e.g. Fickian diffusion, wall effects, or molecules traveling different paths through the bed that lead to broadening of peaks, which are lumped together and described in the model by a dispersion term. The flux of molecules from the interstitial volume into the porous particle volume *p* of the bed can be hindered which is considered by the model by a film mass transfer model. Inside the bead pores the diffusive transport is assumed to be much faster than the mass transfer into the pores and thus assumed to be instantaneous. As a consequence, there are no concentration gradients present along the bead radius which leads to simplified general rate model (GRM) equations with lumped pores, the lumped pore diffusion (POR) model. The model describing the transport is independent from the model describing molecule adsorption to the adsorbed volume, or solid phase s. Column packing and bead sizes are assumed to be very homogenous, which leads to the assumptions that first, a concentration gradient in the column radial direction is neglected, second the porosity of the packed bed and that of the beads do not vary along the column axis and the bead radius.

The GRM is used to describe transport of biomolecules through a porous packed bed due to convection, dispersion, and diffusion. Convection is the movement of a species through a system due to the motion of the bulk fluid surrounding it. Dispersion describes peak broadening due to viscosity of a mixture, collisions with tubing walls or particles, and travel through a packed bed. Further mass transfer: Transport from bulk liquid into the pore and diffusion inside of the pore is described by the GRM. The diffusion into the pore from the bulk liquid can be a rate limiting step due to spatial confinement depending on the proportion of molecule size and pore size. The rate at which this transport occurs is described proportional to the film mass transfer coefficient. The second component is the diffusion *through* the pore, which is described with the diffusion coefficient of the respective species. This usually occurs more quickly than the film mass transport. Due to this assumption the equations of the GRM are simplified such that a radial concentration gradient in the pores is neglected, which leads to the lumped pore model.

The simplified GRM for any species concentration is $c_i \in [0, N_c]$, with $N_c$ denoting the number of components, $t$ denoting time in $s$, $z$ denoting the axial coordinate along the column length $L$, and $r$ denoting radial bead coordinate along bead radius $r_p$.

$$\frac{\partial c_i^l}{\partial t} = -u \frac{\partial c_i^l}{\partial z} + D_{\text{ax}} \frac{\partial^2 c_i^l}{\partial z^2} - \frac{(1-\varepsilon_c)}{\varepsilon_c} \frac{3}{r_p} k_{f,i} \left( c_i^l - c_i^p \right) \qquad (1)$$

$$\frac{\partial c_i^p}{\partial t} = \frac{3}{r_p} k_{f,i} \left( c_i^l - c_i^p \right) - \frac{1-\varepsilon_p}{\varepsilon_p} \frac{\partial c_i^s}{\partial t} \qquad (2)$$

Danckwerts boundary conditions are applied:

$$u c_{i,in}^l (t, z = 0) = u\, c_i^l(t, z = 0) - D_{ax} \frac{\partial c^l}{\partial z} (t, z = 0) \qquad (3)$$

$$\frac{\partial c_i^l}{\partial z} (t, z = L) = 0 \qquad (4)$$

Initial conditions are set to:

$$c_i^l(t = 0, z) = c_{i,0}^l \qquad (5)$$

$$c_i^p(t=0,z) = c_{i,0}^p \qquad (6)$$

$$c_i^s(t=0,z) = c_{i,0}^s \qquad (7)$$

*l, p, s* denote the reference volumes of interstitial volume (void between beads), pore volume (void inside beads), and solid volume (solid part including adsorbed molecules). The interstitial flow velocity is denoted by u in *m/s*, the axial dispersion coefficient is denoted by $D_{ax}$ in *m²/s*, the column porosity (volume ratio of interstitial void and total bed volume) is denoted by $\varepsilon_c$, the bead porosity (volume ratio of liquid pore volume and total bead volume) is denoted by $\varepsilon_p$, the film mass transfer coefficient is denoted by $k_{f,i}$ in m/s.

A model of a dispersed plug-flow reactor (DPFR) was used to describe molecule transport in tubing. The equations of a DPFR describe convective laminar flow in a cylindrical tube, neglecting a flow profile. The model equations are described by:

$$\frac{\partial c_i^{tub}}{\partial t} = -u^{tub}\frac{\partial c_i^{tub}}{\partial z} + D_{ax}^{tub}\frac{\partial^2 c_i^{tub}}{\partial z^2} \qquad (8)$$

Here, $c_i^{\mathrm{tub}}$ denotes the concentration inside the tubing, $u^{tub}$ and $D_{ax}^{tub}$ denote the interstitial velocity and dispersion coefficient inside the tubing.

A continuous stirred tank reactor (CSTR) model was used to describe mixing effects within the chromatography system of valves and mixing chambers. That is, a tank model with inlets and outlets and constant volume is used to describe how the concentrations of multiple components change when mixing them together. The model equations are described by:

$$\frac{\partial c_i^m}{\partial t} = \frac{1}{V^m}\sum_{w=1}^{N_{in}} Q_{in,w}\, c_{in,i,w}^m - \sum_{w=1}^{N_{out}} Q_{out},w c_{i,w}^m \qquad (9)$$

Initial conditions are given by

$$c_i^{tub}(t=0,z) = c_{i,0}^{tub} \qquad (10)$$

$$c_i^m(t=0) = c_{i,0}^m \qquad (11)$$

Here, $c_i^{\mathrm{m}}$ denotes the concentration inside the tank, $V^m$ in *m³* denotes the tank volume, $Q_{in,w}$ and $Q_{out}$ denote volumetric flow rate in *m³/s* into and out the tank.

Steric Mass Action Model

The steric mass action (SMA) model describes adsorption, desorption, and steric interactions of a protein with a resin. These interactions with the resin are characterized with four parameters: adsorption coefficient, desorption coefficient, a steric factor, and a characteristic charge. These parameters are specific to each modeled species. Unlike the transport parameters, the binding parameters translate between different scales and systems so long as the resin and molecule stay the same.

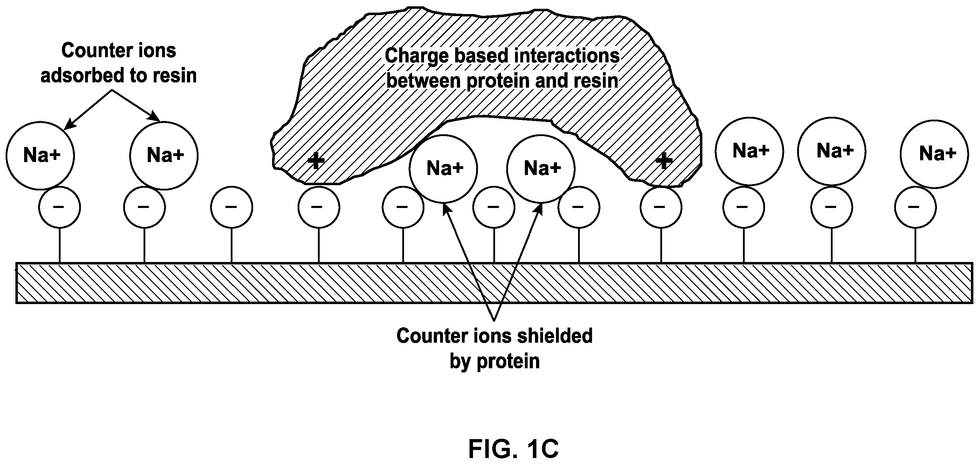

Adsorption and desorption coefficients describe the rate at which the molecules adsorb (bind) and desorb (elute) from the resin. They describe the binding kinetics of the modeled species and are affected by salt concentration. The steric factor and characteristic charge parameters describe the influence of a molecule's size and surface charge on the binding kinetics, respectively. The steric factor describes the number of spaces a molecule "shields" from binding on the resin. The characteristic charge describes the number of charge-based interactions a molecule has with a resin. The sum of the steric factor and characteristic charge quantify the total number of binding sites occupied by the molecule on the resin. A visualization of these four factors is shown in FIG. 1C.

In addition to the steric factor and characteristic charge, the ionic capacity of the resin is required in order to determine the binding capacity of the protein to the resin. The SMA model is based around a neutral charge balance on the resin, so all charged sites are occupied with either counter ions or oppositely charged protein. The ionic capacity can be determined from a titration experiment which is detailed in the methods section.

The equation system for the SMA model is described as follows:

$$\frac{\partial c_i^s}{\partial t} = k_{a,i} c_i^p \bar{c}_0^{s\,v_i} - k_{d,i} c_0^{p\,v_i} c_i^s \qquad (12)$$

$$\Lambda = \bar{c}_0 + \sum_{i=1}^{N_c} (v_i + \sigma_i) c_i^s \qquad (13)$$

$$c_0^s = \bar{c}_0^s + \sum_{i=1}^{N_c} \sigma_i c_i^s \qquad (14)$$

$$c_i^s(t = 0, z, p) = c_{i,0}^s \qquad (15)$$

Here, A in $mol/m^3$ denotes the total column capacity, $v_i$ denotes the characteristic charge, $\sigma_i$ denotes the steric factor, $k_{a,i}$ in $m_p^3/m_s^3\,s$, $k_{d,i}$ in $1/s$, $\bar{c}_0$ denotes the concentration of counter ions available for molecule adsorption (not shielded), $c_0^s$ is the total amount of counter ions adsorbed to the resin.

A key limitation of the SMA isotherm is that binding parameter values are applicable only at the pH they were determined at. This limits the robustness of a predictive mechanistic model since pH is an important process parameter in the CEX step. In order to expand on the current SMA model and improve robustness, a function that can address pH dependence is required.

Experiments for model calibration were performed according to the standard process, with the only difference being the pH of the buffers and load material.

Numerical Solvers

Numerical solutions are calculated for all above equation systems as analytic solutions are not available. The general approach is to discretize the partial differential equations (PDEs) along the special variable, which results in a number of ordinary differential equations (ODEs). The ODE systems can then be solved using time-stepping algorithms.

The special discretization of the chromatography models can be achieved by using a finite volume method. Here the mass balance equations are set-up for a number of uniform finite volume elements along the column length z and the bead radius r. The concentrations in each cell volume are averaged, which results in a new set of state variables that are associated to each cell volume. The numerical integration is solving the discretized equations for those averaged volume concentrations. The boundary conditions at the column inlet and outlet (equations (3) and (4)) are integrated into the discretized equation at the first and last finite volume. The weighted essentially non-oscillatory (WENO) scheme is used for approximating the concentrations at the finite volume boundaries.

The time-stepping solver or ODE solver used here is part of the CADET framework and is using a backward-differential formula (BFD) method for time integration. The CADET implementation is using the implicit differential-algebraic (IDA) solver contained in the SUNDIALS package. The solver tolerances were set with Abstol at $10^{-6}$, Algtol at $10^{-6}$, Reltol at $10^{-8}$, and initial step size as $10^{-4}$.

Parameter Estimation Algorithm

*Goal System*

The present disclosure introduces a new goal system for estimating chromatography model parameters. Here, goal means a set of shape-sensitive metrics. Each metric is a single scalar value such as the time difference between simulation and measurement at peak max, the height difference at peak max, etc. Metrics are defined on the basis of specific knowledge of the modeled process and of typical errors in the measurement data. The metrics in a goal can be passed to a multi-objective search algorithm or they can be combined into one objective and passed to a single-objective search algorithm.

Multiple metrics can guide (multi-objective) search strategies much better to the desired optimum than the commonly applied sum of squared differences (SSD) can guide (single objective) search strategies. The metrics are grouped into scores to organize the specification of goals for different parameter estimation procedures in CADET-Match. A suitable goal must have the property that as the fit quality improves the value of at least one metric must decrease and as the fit quality worsens, the value of at least one metric must increase. A goal that does not have this property can guide search algorithms in the wrong direction. This might appear trivial but is critically important and at the core of why new goals had to be created. Due to competitive binding and other complex mechanisms, many model parameters influence the simulated chromatograms in non-linearly coupled ways. Therefore, some customarily applied metrics such as SSD can increase while the model parameters move closer to their correct values.

In addition, measured chromatograms from industrial large-scale applications are often affected by systematic errors such as pump delays that can cause a time offset between the measured and simulated signals, unless the model captures the cause of the delay which is often not possible in practice. A good goal needs to account for this, since otherwise the simulated peaks end up in the correct location but with the wrong shape. Wrong shapes generally indicate errors in the underlying physics of the model. Hence, good metrics should prefer peaks with nearly fitting shape but small offsets rather than peaks without offset but with wrong shapes.

*Sum of Square Difference*

For the SSD, the squared differences between simulated and measured chromatograms are summed up over the time points (see equation 16, below). For the normalized root mean square difference (NRMSD), the SSD is divided by the number of time points before taking the square root and dividing the result by the maximum of the measurement data (see equation 17, below). Due to the monotonicity of this transformation, SSD and NRMSD have the same minima. These metrics can be applied to the entire chromatogram, $J = \{1; \ldots ; N_d\}$, or a subset of the data, $J \subset \{1; \ldots ; N_d\}$. The SSD is most commonly applied with gradient descent search algorithms. Hence, it is included here for comparison. The theory is well established in the framework of maximum likelihood estimation for independent and identically distributed random measurement errors. However, these preconditions are generally not valid for modeling large-scale preparative chromatography where systematic errors such as feed variations, pump delays and flow rate variations typically dominate the detector noise. The NRMSD is better suited than the SSD for interpreting the results, because the numerator has the same unit as the data and is related to the maximum concentration by the denominator.

$$SSD(X_i, Y_i)_J = \sum_{j \in J} (X_{i,j} - Y_{i,j})^2 \qquad (16)$$

$$NRMSD(X_i, Y_i)_J = \frac{\sqrt{\frac{1}{|J|} \sum_{j \in J} (X_{i,j} - Y_{i,j})^2}}{\max_{j \in J} |X_{i,j}|} \qquad (17)$$

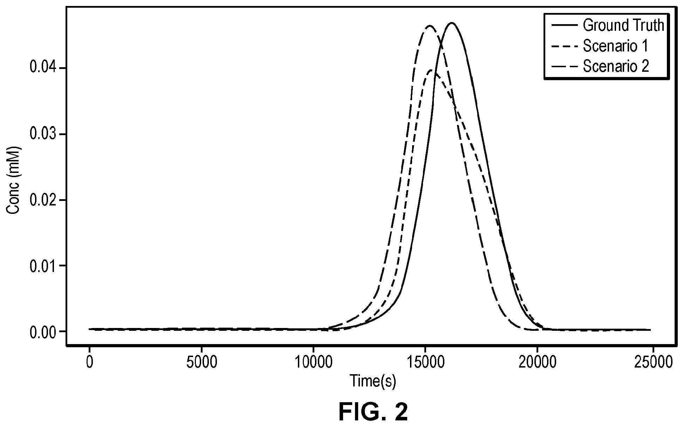

The SSD requires a sufficient overlap between the simulated and measured chromatograms to be sensitive to parameter changes and guide the search algorithm towards the optimum. This can complicate the choice of suitable starting points, in particular for sharp and/ or small peaks. A further disadvantage of the SSD is illustrated in FIG. 2 using a synthetic example with parameters shown in Table 1 The parameters of scenario 2 are much closer to the ground truth, with only a relatively small deviation in the characteristic charge, v, even though Scenario 1 has a smaller SSD and would hence normally be considered a better fit. In addition, the peak shape of Scenario 2 is more similar to the ground truth but out of alignment.

In real experiments, such time offsets are often caused by pump delays that cannot be explained by the mechanistic model. In this case, the SSD favors peaks that are in the right position even though it is obvious to the human eye that the peak shape is utterly wrong. The model can also reproduce the correct peak shape but not in the right position with a much larger SSD. As the peak shape is predominantly determined by the binding model parameters, the SSD would lead to unphysical parameter values. Hence, we will now introduce alternative metrics that favor peak shape over position and are less demanding on the choice of suitable starting points.

Table 1

|        | Ground Truth | Scenario 1 | Scenario 2 |
|--------|--------------|------------|------------|
| $k_a$  | 2.00         | 2.9e02     | 2.00       |
| $k_d$  | 10.0         | 3.7e03     | 10.0       |
| $v$    | 7.00         | 9.60       | 6.00       |
| $\sigma$ | 50.0       | 99.0       | 50.0       |
| SSD    |              | 4.3e+00    | 1.5e+01    |
| NRMSD  |              | 4.2e-03    | 7.7e-03    |

Alternative Metrics

The shape and position of a chromatogram are determined by mass transport through the entire system, including the column and external volumes, and binding to the functionalized resin. The disadvantages of the SSD are avoided by separately measuring the shape, position, and height of individual peaks without requiring base line separation. Metrics for peak position are sensitive to changes of the respective model parameters, independent of peak overlaps between simulation and measured data. This provides flexibility and robustness with respect to the choice of starting points for the search algorithms, which is critically important for automation in industrial applications. Focusing on individual peaks allows to reduce the impact of process variations and further components that are not fully included in the model. For example, pump washes or pressure alarms can cause spurious peaks, and industrial feeds usually contain large numbers of more or less uncharacterized impurities. In such cases, separate metrics can be assigned to distinct but partially separated peaks of target components and impurities of high and low molecular weight. Separate metrics also help to provide (multi-objective) search algorithms with more precise information on which component impacts which peak. All metrics yield zero for a perfect match between simulation and experiment.

Peak Shape

The shape metric is the most innovative of the new metrics and a core component of nearly all scores. It is the difference between one and the maximum of the Pearson correlation between measured and simulated chromatograms over a continuous range of time offsets (see equation 18, below). For evaluating this metric, the simulated chromatogram is shifted in time,   $Y_i^\tau(t) = Y_i(t - \tau)$ . The maximum in equation (18) is determined by an initial grid search followed by Powell's method. While it is advisable for the SSD to simulate the chromatogram on the same grid as the measurement data, continuous offsets require interpolating the simulated data. This is implemented in CADET-Match using the 5th order spline. The interpolation can be improved by simulating the chromatogram on a denser grid than required for the SSD. Allowing for continuous time offsets that are independent of the discrete measurement grid is crucial for creating a smooth metric. However, it complicates the analytical tracking of parameter sensitivities. The shape metric is typically applied to individual peaks that are sliced out of the chromatogram. As required, it is zero for a perfect match between simulation and experiment and increases for worse agreement. By design, this metric only accounts for shape similarity and requires two other metrics to measure the time offset and height difference between simulation and measurement data.

$$Shape(X_i, Y_i)_J = 1 - \max_\tau \left( \frac{cov(X_i, Y_i^\tau)_J}{\sigma_{X_{i,J}} \sigma_{Y_i^\tau,J}} \right) \qquad (18)$$

Peak Position

The position metric can be more complex than it might first appear. It is based on the time offset, $t_s$, obtained from maximizing equation (19), below.

$$t_s(X_i, Y_i)_J = \arg\max_\tau \left( \frac{cov(X_i, Y_i^\tau)_J}{\sigma_{X_{i,J}} \sigma_{Y_i^\tau,J}} \right) \qquad (19)$$

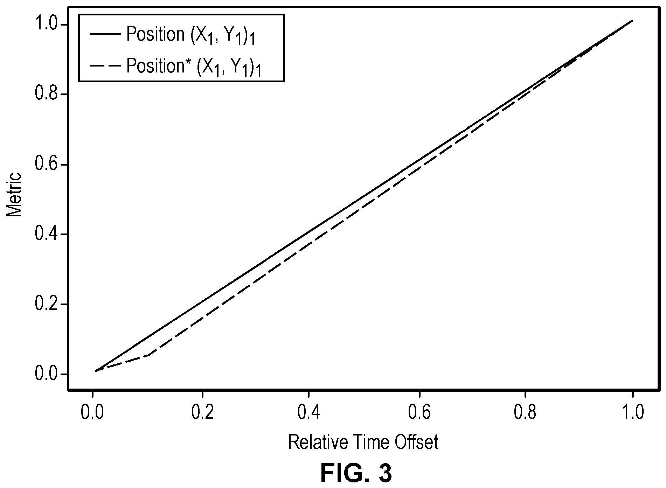

The standard position metric gives an immediate penalty for a time offset with a linear ascent to one when out of alignment by $t_r$ (see equation 20, below). Here, $t_r$ is the length of the measurement time interval. It can be replaced by the retention time of a non-binding tracer if sufficient starting points are provided to the search algorithm. As will be shown in the results section, this metric it a good choice for estimating column and particle porosity. However, it requires great care in running experiments to ensure there are as few delays as possible and alarms are immediately cancelled. Such delays affect the chromatogram almost exactly like changes in the column and particle porosities. As previously discussed, in the presence of such delays it can be advantageous for the parameter estimation procedure to compromise on the alignment of simulated and measured peaks while matching their shape and height. Hence, an alternative position metric is introduced that initially reduces the penalty by 1/2 in a range of less than 1/10 $t_r$ and then linearly ascends to one when out of alignment by $t_r$, see equation (21), below. FIG. 3 illustrates the difference between the standard and initially reduced position penalty metrics. The initial reduction, 1/2, and range, 1/10, are chosen by experience and can be changed by the user.

$$Position(X_i, Y_i)_J = \frac{t_s(X_i, Y_i)_J}{t_r} \tag{20}$$

$$Position^*(X_i, Y_i)_J = \begin{cases} \dfrac{1}{2}\dfrac{t_s(X_i, Y_i)_J}{t_r}, & \dfrac{t_s(X_i, Y_i)_J}{t_r} \le \dfrac{1}{10} \\[2ex] \dfrac{19}{18}\dfrac{t_s(X_i, Y_i)_J}{t_r} - \dfrac{1}{18}, & \dfrac{t_s(X_i, Y_i)_J}{t_r} > \dfrac{1}{10} \end{cases} \tag{21}$$

Peak Height

The peak height metric relates the maximal concentration of the simulated chromatogram to that of the measured data, (see equation (18)). This metric ascends to one when the difference in either direction is larger than 100%.

$$Height(X_i, Y_i)_J = \left| 1 - \frac{\max\limits_{j \in J} Y_{i,j}}{\max\limits_{j \in J} X_{i,j}} \right| \tag{22}$$

*Combined Scores*

The previously introduced metrics serve as building blocks for creating scores that quantify the difference between simulated chromatograms and measurement data. Scores are defined for individual components and can target the full chromatogram, individual peaks, or parts thereof, such as only the front of a peak. Each score is a set of metrics that depend on the index of the component, *i*, and on the set of considered time points, *J*. Goals will be composed of one or several scores that can then be combined into one objective or passed to a multi-objective search algorithm.

Sum of Square Difference

The SSD score is the set of differences between simulated and measured chromatogram data, see equation (23) below. For technical reasons, each difference is interpreted as separate metric. In section 8, a goal will be defined as sum of squares of these metrics.

$$S_{SSD} = \{X_{i,j} - Y_{i,j} \mid j \in J\} \tag{23}$$

Full Peak

The most straightforward of the new scores is the combination of peak shape, position, and height, $S_{Gauss}$. This score is usually applied to a time interval, specified by the index set *J*, that contains a single peak of nearly Gaussian shape. This time interval is not automatically detected but needs to be specified by the user. A more elaborated score, $S_{Peak}$, additionally accounts for the shape, minimum and maximum of the time derivative and is better suited for fitting non-Gaussian peaks. By combining the peak shape with the shape of its derivative, this score is highly sensitive to the curvature of the chromatogram. The time offsets in the peak and in the slope are technically not constrained to be equal. In practice they hardly differ, except for the very first iterations of search algorithms with poor starting points. The scores $S^*_{Gauss}$ and $S^*_{Peak}$ are analogously defined with *Position** $(X_i, Y_i)_J$ in place of *Position*$(X_i, Y_i)_J$. As will be demonstrated in the results section, the score $S_{Peak}$ with standard position penalty is particularly useful for estimating transport parameters, while the score $S^*_{Peak}$ with initially reduced position penalty is more suitable for estimating binding parameters.

$$S_{Gauss} = \{Shape(X_i, Y_i)_J; Position(X_i, Y_i)_J; Height(X_i, Y_i)_J\} \tag{24}$$

$$S_{Slope} = \{Shape(\dot{X}_i, \dot{Y}_i)_J; Height(-\dot{X}_i, -\dot{Y}_i)_J; Height(\dot{X}_i, \dot{Y}_i)_J\} \tag{24}$$

$$S_{Peak} = S_{Gauss} \cup S_{Slope} \qquad\qquad (25)$$

Peak Front

In some cases, only the front of a peak can be used for parameter estimation while other parts of the peak are deteriorated by unspecific interactions of a tracer molecule with the column or tubing. Dextran is a prominent example for such non-ideal behavior that leads to strong tailing and a reduced peak height. On the other hand, Dextran is commonly applied as tracer that does not penetrate the particle pores. Errors in the execution of an experiment can also render the back of a peak unusable for parameter estimation. These situations are addressed by a score, $S_{Front}$, that considers shape and position but not height of the peak. This score is typically used with rather short time intervals and few data points.

$$S_{Front} = \{Shape(X_i, Y_i)_J; Position(X_i, Y_i)_J\} \qquad\qquad (26)$$

The peak front score is designed to extract as much usable information as possible from the chromatogram. Unsupervised application of this score requires to automatically determine the usable time interval while robustly removing the non-ideal parts with high precision on the cut points. For dextran data, the back end of this interval is chosen at the first inflection point of the measured chromatogram, i.e. the upper cut point is at the first maximum of the time derivative. By experience, this is a good choice as non-ideal interactions mainly impact on the height and tailing of the peak. The lower cut point is chosen where the measured chromatogram starts to differ from the baseline by more than 0.1% of the concentration at the upper cut point. By experience, 0.1% is a robust choice for this threshold. The exact positions of these cut points are determined using Powell's method on the continuous spline approximation from section 5. The nearest time points of the discrete measurement data are then used as boundaries of the time interval specified by $J$.

Fractionation Data

Optical detectors that are typically applied for measuring chromatograms can usually not distinguish between different chemical components. Instead, they deliver a single sum signal where the contributions of the individual components are weighted by their extinction coefficients. Such signals alone cannot be used for parameter estimation unless the peaks of the relevant components are sufficiently separated. For instance, the acidic, main, and basic components of a monoclonal antibody often completely overlap in a single peak. This situation is normally addressed by fractionation, i.e. pooling the efflux of the column into a series of vials. Each of these vials is then analyzed offline to quantify the components of interest, which provides additional information for setting up a dedicated parameter estimation score.

The previously introduced metrics can generally be applied to the concentrations in each vial using the centers of the corresponding collection intervals as time points. For precise comparison, the corresponding per component simulations are averaged over the same collection intervals when a metric is applied to fractionation data. The resulting information is often sparse, with 5 to 10 fractions per peak, and can be afflicted with additional errors in the fractionation times and volumes. Small shifts in the collection intervals can cause major changes in the distribution of components between the analyzed fractions, particularly for sharp peaks. The smoothing procedure from section 5 is not suitable for such sparse measurements. Nonetheless, the spline approximation must be applied to the original simulated data before it is shifted and virtually fractionated to determine the time offset, $t_s$, in order to maintain sub-grid accuracy. Based on this offset, the scores $S_{Gauss}^*$ and $S_{Peak}^*$ as well as their immediately penalized versions can be computed. Analogously, the SSD score can be applied to fractionation data by averaging the simulations over the collection intervals.

Search Strategies

The previously described scores have been defined per component, but they can also be applied to the sum signal. The scores of multiple components can be merged to create a goal for the applied search strategy. It is advisable to use all available information by including scores on the sum signal. CADET-Match uses two alternative search strategies, gradient descent, and a multi-objective genetic algorithm. For gradient descent, all metrics need to be combined into a single scalar value, while the genetic algorithm can operate on multiple metrics.

*Gradient Descent*

Gradient descent algorithms search for a local optimum of the goal function using derivative information with respect to the sought parameters. Gradient descent has long been used for parameter estimation in chromatography. It is very efficient near the sought optimum but can fail if the goal function is not smooth or the Jacobian becomes singular. Moreover, this algorithm is prone to becoming trapped in local optima, which can be remote from the starting point. This can be avoided by basin hopping or multi-start strategies. The latter is often applied when refining the results of population bases search strategies.

*Genetic Algorithm (GA)*

Genetic algorithms (GA) are an example of biomimicry. At their core they work like a colony of bacteria adapting to an outside environment and share many of the same features. GAs are embarrassingly parallel. An initial population is created, often using quasi-random methods such as Latin hypercube sampling or Sobol sequences. Each member of the population is then evaluated based on one or more objectives. At the end of each generation the fittest members survive and reproduce to form the next generation. The next generation is created by a combination of breeding and mutation on the survived members. There are variations in this procedure that maintain population diversity, choose members to be included in the next generation and change how breeding and mutation are implemented. These variations result in different algorithms such as NSGA2, NSGA3 and SPEA2. In view of the no free lunch theorem, different GA variants were tested and optimized on a variety of problems before settling on NSGA2 for single-objective problems and NSGA3 for multi-objective problems.

*Online Monitoring*

Building complex models correctly, properly processing experimental data, and determining suitable starting points can be difficult and tedious tasks. Based on experience, new models or concepts are unlikely to be correctly implemented from scratch. However, such issues can only be tested by attempting to fit model to data. Since errors can often be identified in early phases of the parameter estimation process, CADET-Match provides functionality to monitor the progress of specific indicators such as peak height, shape, mass, etc. This allows to observe if the starting points yield reasonable results and if the search algorithm continuously improves the goal. Online monitoring enables early aborting if progress is poor or if results are already good enough. This is essential for rapid testing of models, goals, starting points and stopping criteria. Since suitable starting points can be hard to determine, a GA with rather large population size is generally a good choice for initial testing. Multi-start gradient search is not a good alternative, as parallel iterative processes are more difficult to monitor.

*Parameter Transformation*

Most search strategies struggle when the sought parameters spread over orders of magnitude or are correlated with each other. Parameter transformations can help to soften these challenges. CADET-Match provides several transformation rules, i.e. biunique maps between model parameters, $p$, that are passed to the chromatography simulator and estimated parameters, $p'$, that are passed to the search algorithm. These transformations are based on upper bounds, $\hat{p}$, and lower bounds, $\check{p}$, of the model parameters.

The linear transformation, (see equation 27, below) maps the original range $[\check{p}, \hat{p}]$ to $[0,1]$. This is usually sufficient when the upper and lower parameter bounds are less than three orders of magnitude apart from each other. For wider ranges, a nonlinear transformation, (see equation 28, below) is advisable. The latter automatically adapts the step width of the search algorithm to the magnitude of the respective model parameter. Otherwise, the same step could be huge for one parameter but tiny for another.

$$p = (\hat{p} - \check{p}) \cdot p' + \check{p} \qquad (27)$$

$$p = \exp\big((log(\hat{p}) - log(\check{p})) \cdot p' + log(\check{p})\big) \qquad (28)$$

Nonlinear parameter correlations are hard to detect and need to be specifically addressed. For instance, the adsorption and equilibrium constants, $k_a$ and $k_{eq}$, are usually much less correlated than the adsorption and desorption constants, $k_a$ and $k_d$. The relation $k_{eq} = k_a/k_d$ allows to pass $k_a$ and $k_d$ to the simulator while the search algorithm operates on $k_a$ and $k_{eq}$. The corresponding transformation (see equations 29 and 30 below) also accounts for large parameter ranges. This decouples the binding rate from the concentration equilibrium.

$$k_a = \exp\left(\left(log(\hat{k}_a) - log(\check{k}_a)\right) \cdot k'_a + log(\check{k}_a)\right) \qquad (29)$$

$$k_d = \frac{\exp\left(\left(\log(\hat{k}_a) - \log(\check{k}_a)\right) \cdot k'_a + \log(\check{k}_a)\right)}{k'_{eq}} \qquad (30)$$

Sensitivity Analysis

The sensitivity of a system with respect to an input at a working point is defined as the derivative of the systems solution. Such an input can be model parameters or feed concentrations. The sensitivity measures how much a change of a certain model input influences the model output.

The sensitivity of any model input can be calculated by the CADET library and written to the .h5 output. CADET is using algorithmic differentiation. Numeric approximations of the analytic derivative can be obtained by finite differences method, which is available in the MoChA tool as well.

Parameter Identifiability

Model parameters generally can be obtained by measuring, such as using optical microscopy to determine pore transport coefficients. However, taking direct measurements of model parameters is often not possible or very laborious, hence recursive parameter estimation is a method often used in chromatography modeling. Parameter identifiability describes the ability to find model parameters that are unique for a known given input and model equation. In case of chromatography model parameters have poor identifiability when various parameter sets give rise to the same simulated chromatogram or chromatograms with only small deviation. This fact makes parameter estimation a challenge. The parameter identifiability can be visualized by outlining the objective value calculated for the evaluation of fit quality for a specific parameter value.

**Materials and Methods**

A new modality, a BiTE® (bispecific T-cell engager) antibody construct, is used as an example to present the methodical approach here. The molecule is a half-life extended BiTE® as a member of a class of bispecific antibodies that is subject to high expectations in cancer treatment and other severe diseases. The BiTE® molecule was produced by using Chinese hamster ovary cell lines that were developed by Amgen and then captured by a Protein A affinity step. The BiTE® was captured by a Protein A affinity step followed by viral inactivation and depth filtration resulting in Filtered Virus Inactivated Pool (FVIP).

Sequentially, virus inactivation was applied by adding 1 M formic acid. The pool was neutralized to pH 5.0 by using 2 M tris base which results in a Non-Filtered Virus Inactivated Pool (nVIP). The nVIP was filtered by Millistak+® HC Pod Depth Filter which results in Filtered Virus inactivated Pool (FVIP).

Experiments were performed using an ÄKTA™ Avant 150 chromatography machine with Unicorn 7.3 software. pH, UV, and conductivity measurements were performed inline using the standard UV, pH, and conductivity probes installed in the chromatography machine. To confirm readings, offline measurements were taken for UV, pH, and conductivity using a SoloVPE (C Technologies, Inc.), pH probe (ThermoFisher Scientific), and conductivity probe (ThermoFisher Scientific), respectively.

Bench Top Experiments

For bench top scale runs Capto SP ImpRes resin (Cytiva™) was packed into a Millipore vantage column (i.d. 1.15 cm and ht 20.7 cm) with a compression ratio of 1.11, which results in a column volume of 21.5 mL. The asymmetry factor of the column was 0.91 and the HETP was 0.0203 cm.

Dextran Blue 2000 solution (Cytiva™) was used as a tracer molecule for dead volume and dispersion experiments. A 2L solution was prepared for Dextran breakthrough and pulse experiments at a concentration of 0.1g/L of Dextran in MilliQ water.

The ionic capacity of the Capto SP ImpReS resin used was obtained by a titration method introduced by Thiemo Huuk 2016. A small column with a 1.7mL CV packed with the same lot of CaptoSP ImpRes was exposed to 0.5mM Hydrochloric Acid (HCl) for ~500CV. The column was then flushed with water to remove remaining acid. The column was exposed to 0.01M Sodium Hydroxide (NaOH). Finally, the volume of NaOH required to fully exchange counter ions was used to determine the ionic capacity of the column according to Thiemo Huuk 2016.

Filtered viral inactivated pool (FVIP) material was used for the chromatography runs on bench top scale. The feed material was from the same production lot, and the feed characteristics are shown below in Table 2.

Table 2

| Run: | Concentration (mg/mL) | Conductivity (mS/cm) | pH |
|---|---|---|---|
| 8 mM/CV | 5.06 | 7.18 | 5.05 |
| 5 mM/CV | 5.08 | 6.15 | 5.02 |
| 11 mM/CV | 4.79 | 6.32 | 5.03 |
| Step elution | 4.8 | 6.93 | 5.05 |
| Non-Binding Pulse | 4.25 | 44.00 | 4.92 |

The conductivity of the feed material for the non-binding pulse was adjusted using 4M sodium chloride to 180 mS/cm.

All bench top experiments were run at a flow rate of 2.60 ml/min. A bench top bypass experiment was run by connecting the chromatography machine column inlet and outlet tubing with a zero-volume connector. Dextran solution was run from the sample pump at a flow rate of 2.60 ml/min until UV signal stabilized. The same procedure was used with 1M NaCl solution to determine hold up from the sample pump to the conductivity meter.

A Dextran breakthrough and pulse tracer experiment was run including the column. Dextran solution was loaded from the sample line. Initially, 3 CV of 18% ethanol were flowed to establish a baseline UV and conductivity reading. 10mL Dextran was loaded for the pulse experiment, while loading continued until a stable UV signal was achieved for the breakthrough experiment.

A protein breakthrough experiment was run using an equilibration buffer at a conductivity of 44 mS/cm and the conductivity adjusted FVIP pool so that the column was equilibrated and loaded under non-binding conditions. The column was first equilibrated with the high conductivity equilibration buffer for 3 CV and then run with 40mL of the conductivity adjusted FVIP pool. Regeneration was performed after the loading to confirm no protein bound to the column.

Gradient elution runs were run by first equilibrating for 5 CV then loading FVIP material at 25g/L resin. A wash step using equilibration buffer was conducted for 3 CV. Elution was run at gradients of 5, 8, and 11 mM/CV and one step elution was conducted.

Chromatography buffers are listed below in Table 3.

Table 3

| Buffer | pH/Conductivity (mS/cm) | Ingredient amount | | | |
|---|---|---|---|---|---|
| | | Sodium Acetate Anhydrous | Sodium Chloride | Glacial Acetic Acid, 17.4M | Water |
| Equilibration buffer | 4.98/17.1 | 10.12g | 15.778g | 2.988mL | 2000mL |
| | 4.997/ 17.45 | 5.06g | 7.89g | 1.494mL | 1000mL |
| | 4.99/20 | 5.060g | 7.889g | 1.494mL | 1000mL |
| | 5.0/19.6 | 10.120g | 15.778g | 2.988mL | 2000mL |
| Elution buffer | 5.01/29.4 | 12.322g | 29.22g | 2.862mL | 2000mL |
| | 5.009/29.16 | 6.16g | 14.61g | 1.431mL | 1000mL |
| | 5.05/31.8 | 12.322g | 29.22g | 2.862mL | 2000mL |

Process Robustness Experiments

For process robustness runs, non-filtered viral inactivated pool (NVIP) material was used. The same lot material with a concentration of 4.80 g/L was injected for varying loads and gradients.

All process robustness experiments were performed with a flowrate of 4.33mL/min. These experiments were performed including a 44 mL column (i.d. 1.6 cm, length 22 cm). If not mentioned otherwise 30% stop collect criteria in % of max main peak value were applied by stopping collect mode and immediately changing to 100% elution buffer after the detection of this event. This approach is part of the automatic chromatography machine control system in Unicorn.

Protein experiments with different gradients for elution, load factors, and collection criteria were performed. Table 4 shows the combinations of parameters used for the process robustness experiments.

Table 4

| Experiment | Gradient Slope (mM/CV) | Column Loading (g/L) | Stop Collect (% peak max) |
|---|---|---|---|
| Experiment A | 8 | 5 | 30 |
| Experiment B | 10.4 | 15 | 30 |
| Experiment C | 8 | 25 | 30 |
| Experiment D | 8 | 15 | 30 |
| Experiment E | 8 | 15 | 45 |
| Experiment F | 8 | 15 | 15 |
| Experiment G | 5.6 | 15 | 30 |

Algorithms

The model equations were solved by the Chromatography Analysis and Design Toolkit (CADET), an open source simulator. The software allows for combining varying transport and adsorption models for chromatographic steps, as well as CSTR and DPFR type transport models, to describe sequences of unit operations. Furthermore, the software provides tools for model-based analysis, such as providing sensitivities with respect to model input parameters. The software package is available on https://github.com/modsim/CADET. CADET was accessed by a Python interface. The parameter search was performed by the open source software package CADET-Match that is based on the CADET engine, available on https://github.com/modsim/CADET-Match. The estimation algorithm that is used in this tool uses the maximization of multiple objectives that measure the similarity between simulated and measured chromatograms. The best fit was identified by using the result with the highest product of these objective values.

**Results and Discussion**

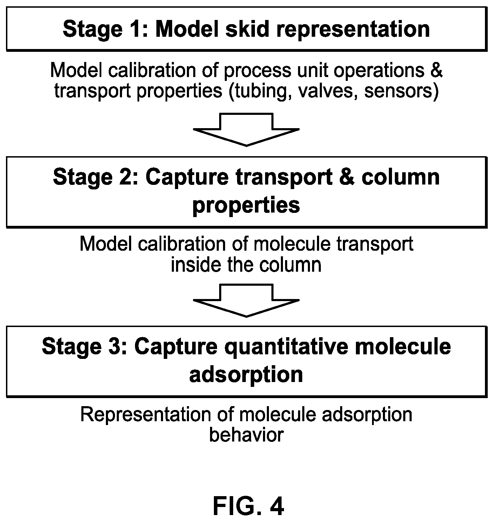

For model development a stage-wise approach was followed. This approach is used to separate transport effects, such as peak delay or peak broadening caused by transport of molecules in tubing and valves, from adsorption effects in the model. This is especially important as mentioned transport effects could be lumped into adsorption coefficient by recursive model calibration which decreases model applicability on varying column scales. The stage-wise approach is indicated in FIG. 4.

Stage 1: Capture Process System

FIG. 1A illustrates a flow path representation of generally used chromatographic skids and machines, such as ÄKTA™. FIG. 1A illustrates varying dead volumes prior to the column. Since this dead volume influences a peak shift during elution with respect of the elution start, the dead volume needs to be accounted for in the model. Possible representations range from simple time shifts of when elution starts to mechanistic representations of the build-in tubing and valve volume.

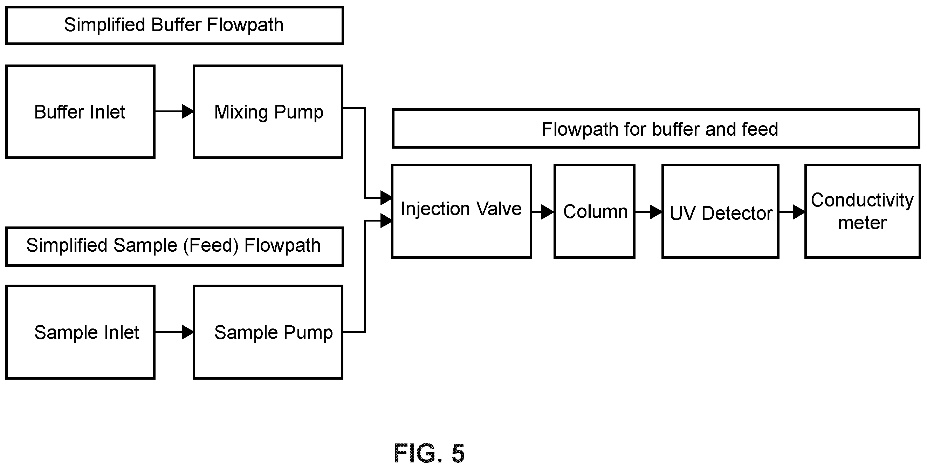

A simplified representation of pathways the molecules experience in the chromatography machine is outlined in FIG. 5. This combination of unit operations was used to develop a representation of the process required for gradient elution.

The resulting system of unit operation models is set-up combining DPFR and CSTR models and a column model. The model sequence entailing multiple unit operations is indicated in FIG. 4.

The tubing model and tank are used to simulate effects of tubing and mixer and valves. The column model equations given in equations (1) to (7) are used.

*Determination of extra-column transport parameters*

A combination of tubing models and valve models equations given in equations (11) and (12) are used to represent the flow path from sample pump to UV sensor and from inlet pump to conductivity sensor. All pathways are set up as a combination of a fitted DPFR and CSTR model prior to the column (inlet pump (buffer) pathway, and sample pump (molecule) pathway) and DPFR models set up only from geometric specifications (length and diameter) provided by the vendor. As described herein, tubing model and mixer/valve models prior to the column are fitted to Dextran breakthrough bypass and salt bypass runs individually. Furthermore, the tubing 6 and tubing 7 models are set up according to the ÄKTA™ Avant 150 manual with 1 mm diameter and 17 cm and 10 cm, respectively. Dispersion coefficients for those two models are set to the dispersion coefficient estimated for the bypass experiments.

Stage 2: Capture Transport and Column Transport Properties

*Determination* of *bypass transport parameters*

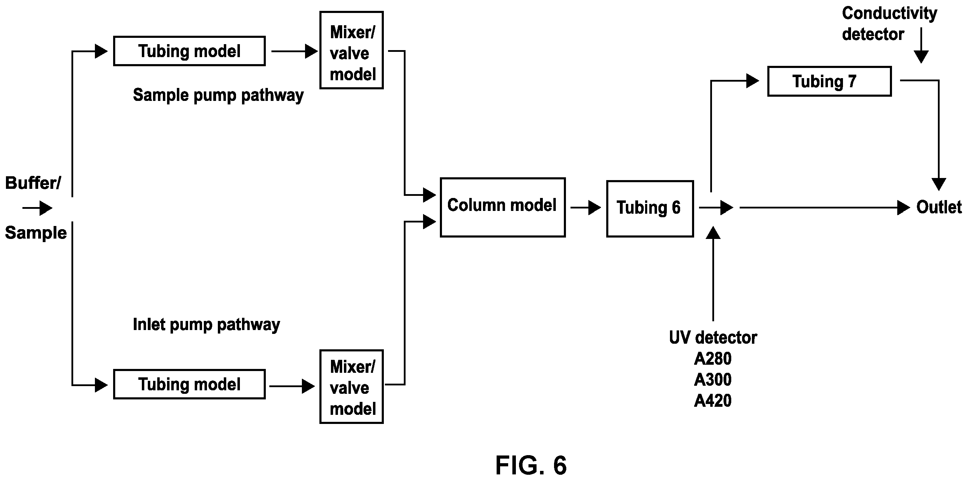

Parameters that describe the off-column transport behavior can be isolated from effects that arise from adsorption by running Dextran and salt tracer experiments that bypass the column. The column inlet and outlet tube are connected by a zero-volume connector such that the column was take out the flow path for the bypass experiments. The flow paths important for gradient elution runs are indicated in FIG. 6. A list of parameters that are estimated in this step is given.

Table 5 provides a list of parameter names, descriptions and ranges that are estimated for each pathway molecules are experiencing. The ranges correspond to the bounds used for the estimator algorithm.

Table 5

| Parameter | Description | Range |
|---|---|---|
| $D_{ax}^{\text{tub}}$ | Dispersion coefficient in DPFR | $10^{-20} - 10^{-3} \, m^2/s$ |
| $V^{DPFR}$ | Volume of DPFR | $10^{-8} - 1 \, m^3$ |
| $A$ | Cross-section area of DPFR | $10^{-10} - 1 \, m^2$ |
| $V^m$ | Volume of CSTR | $10^{-10} - 10^{-3} \, m^3$ |

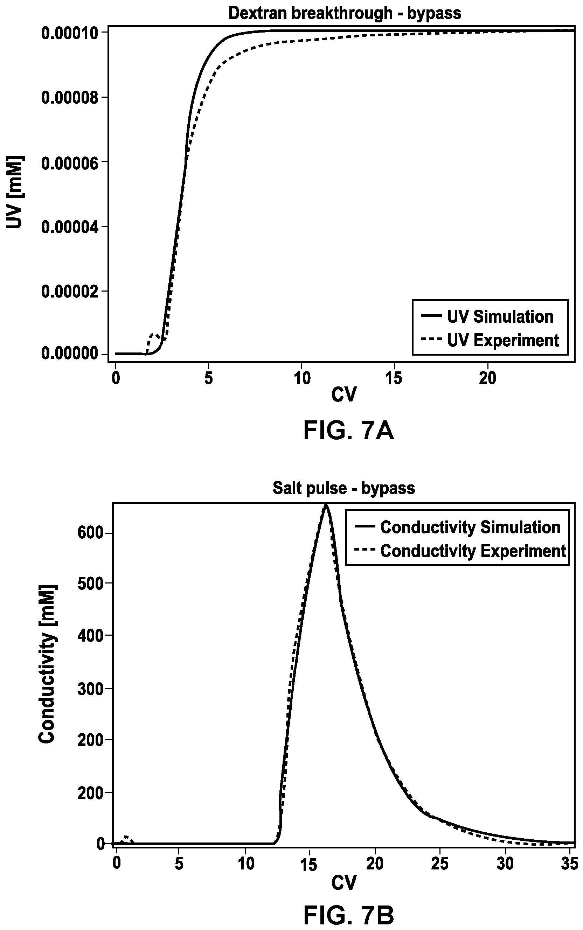

It is important to note that for Dextran non-ideal behavior has been observed. Possible causes are interactions with tubing walls or pressure deviations caused by strong density gradients. Such non-ideal behavior can be observed in various inflection points at the rise of a breakthrough (refer to FIG. 7A). Due to this behavior the parameter estimation algorithm is fitting the simulations to the beginning of the front of a breakthrough or peak and neglects the proceeding points in the chromatogram. In CADET-Match this approach is fully automated. The results of this model calibration step are indicated in FIGS. 7A and 7B.

Final parameters are given in Tables 6A-6C. In FIG. 7A and FIG. 7B the effect of a tracer molecule such as Dextran are evident and show that a fit to the first rising part of the Dextran breakthrough, as shown in FIG. 7A, leads to different parameters in comparison to fitting the whole Dextran breakthrough. The small pre-peak at the rise of the Dextran breakthrough is assumed to be an artifact and has been predominantly ignored by the estimation algorithm. The fit in FIG. 7A provides the model parameter for the sample pathway unit operations (refer to FIG. 6). The calibration result in FIG. 7B indicates the model representation of the inlet pathway (refer to FIG. 6). Due to the close to ideal behavior of the salt tracer only negligible deviations between fitted model and conductivity signal are observed.

Table 6A

| Pathway | $D_{ax}^{\text{tub}} \, [m^2/s]$ | $V^{DPFR} \, [mL]$ | $V^m \, [mL]$ |
|---|---|---|---|
| Sample pathway | 5.32E-14 | 0.68 | 0.09 |
| Inlet Pathway | 3.66E-14 | 1.58 | 5.35 |

Table 6B

| | $D_{ax} \, [m^2/s]$ | $\varepsilon_c \, [-]$ | $\varepsilon_p \, [-]$ | $k_f \, [m/s]$ |
|---|---|---|---|---|
| | 7.5E-14 | 0.38 | 0.86 | 1.87E-6 |

Table 6C

| Component | $k_a$ [1/s] | $k_d$ [1/s] | $\nu$ [−] | $\sigma$ [−] |
|---|---|---|---|---|
| Acidic charge variant | 0.36 | 0.042 | 12.322 | 8.98 |
| Main target molecule | 1.74 | 0.099 | 12.54 | 11.56 |
| Basic charge variant | 9.33 | 0.566 | 14.84 | 8.56 |
| HMW component | 0.23 | 0.002 | 23.02 | 25.25 |

*Determination of column transport parameters*

Column specific transport parameters were determined with Dextran breakthrough and pulse experiments that were performed with the column in line. Knowing the holdup volumes and dispersion caused by the pre- and post-column tubing allows for more accurate parameter determination for column specific transport effects. Blue Dextran 2000 acts as a non-pore penetrating tracer molecule for Capto SP ImpReS, hence in this first step interstitial phase column transport is calibrated. The transport parameters estimated with the Dextran experiments are given in Table . Table 7 provides a list of parameters subject to interstitial phase column transport calibration.

Table 7

| Parameter | Value/range | Note |
|---|---|---|
| $\varepsilon_c$ | $0.2 - 0.4$ [−] | Column porosity |
| $D_{ax}$ | $10^{-20} - 10^{-12}\ m^2/s$ | Column dispersion |

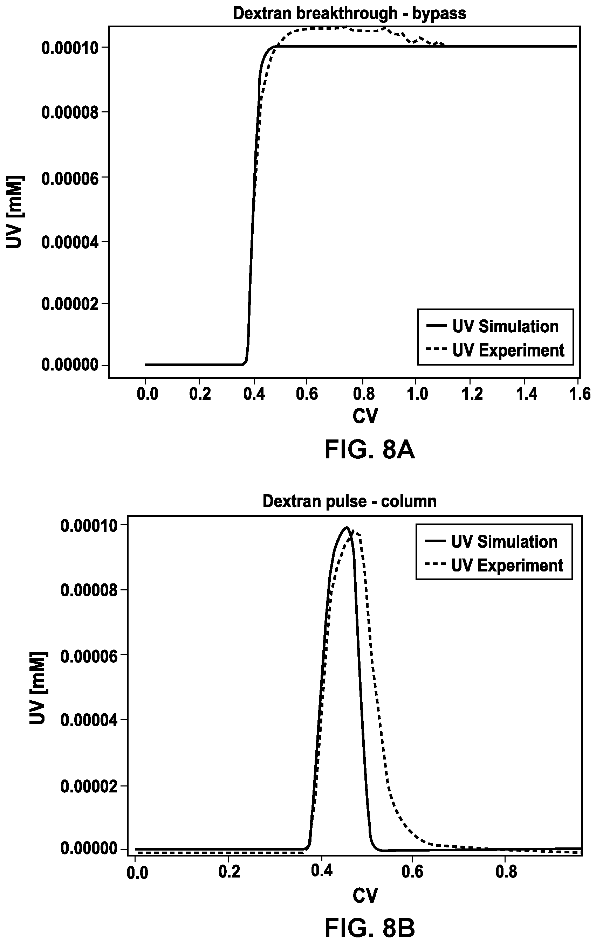

Again the CADET-Match tool was used for this estimation step. The resulting fits are indicated in FIGS. 8A and 8B.

The simulated tracer breakthrough and pulse have been fitted to Dextran experiments at the fronts of the chromatograms and indicate very good fits. The resulting model parameters are given in Tables 6A-6C.

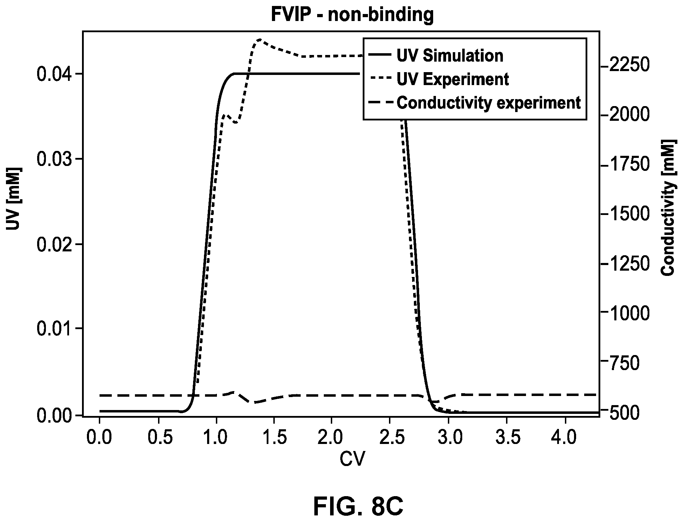

As a next step the transport parameters related to the resin particles are estimated. Those parameters refer to the mass transport from the interstitial volume into the particles and to the particle porosity. In Table 7 the parameters and their ranges used for the estimation procedure are given. The result of the particle transport calibration step is indicated in FIG. 8C. The resulting model parameter values are given in Tables 6A-6C.

Table 7

| Parameter | Value/range | Note |
|---|---|---|
| $k_f$ | $10^{-12} - 10^{-2}\ m/s$ | Film transport coefficient for each component |
| $\varepsilon_p$ | $0.3 - 0.85$ [−] | Pore porosity |

Table 7 provides a list of parameter names and ranges subject to particle transport.

The non-ideality at the top of the chromatogram in FIG. 8C is caused by a pressure warning due to loading the column to its full capacity and is ignored for parameter estimation. Again, only the first part of the breakthrough front is used by the estimation engine. For this step of the model calibration FVIP material is used, which contains target molecule as well as impurities. Therefore, the parameters obtained by this step describe the pore transport for the actual used molecules and not for tracer molecules.

Stage 3: Capture quantitative adsorption behavior

The model description of the system of unit operations of the chromatography machine can now be used in stage 3 to determine the adsorption behavior of the target molecules. Full experimental chromatography runs with different gradient slopes (5mM/CV, 8mM/CV, 11mM/CV, and a "Step" elution) were performed. Elution volume was fractionated at intervals of 0.5 CV and the fractions were analyzed by analytic size-exclusion (SEC-HPLC) and cation-exchange (CEX-HPLC) chromatography to obtain the content of the molecules of interest.

*Modeled Species*

Fractionation data were used to determine the modeled species. The targeted chromatogram area of interest is the main peak and the following peak with impurities.

Based on the analyzed fractions, the main peak is represented in the model by lumping all charge variants of the target molecule into three charge variant species: the acidic, main, and basic charge variant. The molecular weight is considered equal for all three variants. Based on the SEC analysis of the fractions all species contained in the peak of impurities are described in the model as one single component. Finally, a five-component model is obtained, one salt species describing sodium as counter ions and four protein components that describe the acidic, main, and basic charge variants and high molecular weight (HMW) component.

The model uses the concentration of each modeled species in the FVIP material as input parameter, which means that for an accurate representation of molecule species that enter the column, analytical experiments need to be conducted to determine the feed load protein concentrations for each modeled species. In the interest of effort and timeline the load protein concentrations were identified by using the experimental fractionation pools along with the UV chromatograms instead of analytical profiles of the feed solution. The ratios between the peak areas in the fractionation pool and the ratios between the peaks in the UV chromatogram are calculated. Then by considering the total protein concentration present in FVIP material, the concentration of each species in the feed material is calculated.

*Calibration Results*

5 mM/CV and 11 mM/CV gradient runs were used for the binding parameter estimation in parallel. The UV signal as well as the fractionation data were used for the estimation. The parameters and their ranges subject to estimation are listed in Table .

Table 9 provides a list of adsorption parameter names and ranges subject to estimation. Each parameter is estimated for each modeled species.

Table 9

| Parameter | Description | Range |
|---|---|---|
| $k_a$ | Adsorption coefficient | $10^{-3} - 10^2\ 1/s$ |
| $k_d$ | Desorption coefficient | $10^{-8} - 10^8\ 1/s$ |
| $\nu$ | Characteristic charge | $1 - 45\ [-]$ |
| $\sigma$ | Shielding factor | $1 - 60\ [-]$ |

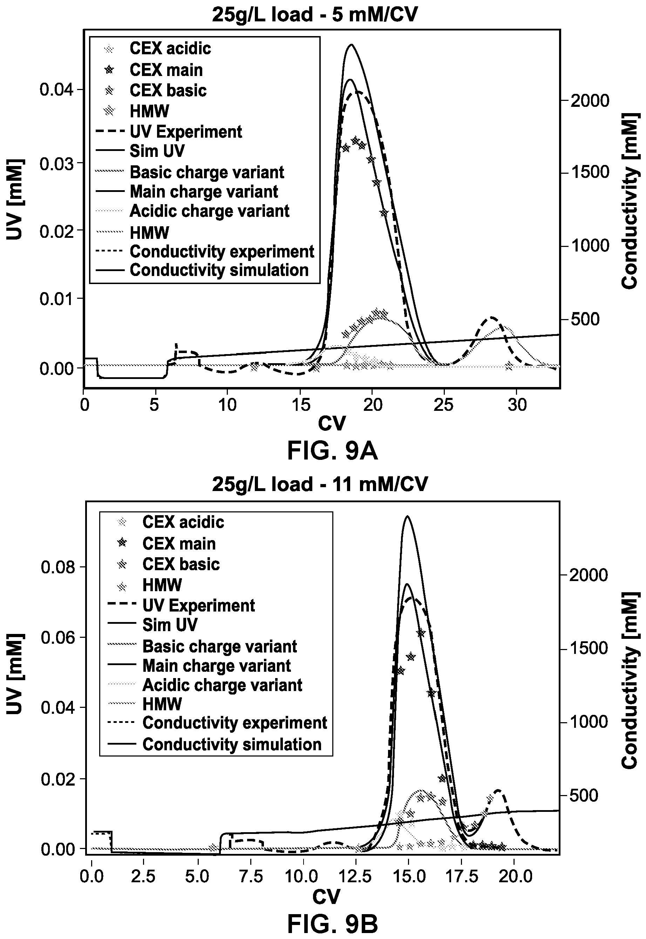

The ionic capacity $\Lambda$ was set to 1339 mM according to the procedure described above in the "Bench Top Experiments" section. The best fits obtained are indicated in FIGS. 9A and 9B. The final adsorption model parameter values are listed in Tables 6A-6C .

Model Assessment

To measure the model predictivity for model validation, the process performance indicators (PPI) pool volume, yield, and pool concentration are used. Further gradient experiment runs on process scale (44 mL column) and on bench top scale (21.5 mL column) with varying load and gradients are used for model validation. Model scale up was performed by setting adapting the column diameter and column length to the specified values for the process scale column. Furthermore, the volumetric flow rate was changed from 2.60 mL/min to 4.33 mL/min. All model parameters were kept the same as estimated by model calibration. PPI thresholds for model acceptability are listed in 9. Visualization of model predictions and experimental data on process scale are presented in FIGS. 10A, 10B, 10C, and 10D.

Table 10

| PPI | Range (%) of experimentally obtained value |
|---|---|
| Yield | $91 \leq$ experiment value $\leq 109$ |
| Pool volume | $84 \leq$ experiment value $\leq 115$ |
| Pool concentration | $64 \leq$ experiment value $\leq 135$ |

Gradient runs at bench-top and process scale are used for model validation. First the PPIs for runs at a 25g/L load factor are compared and the results are indicated in Table 10.

Table 11

|  | Column volume (mL) | Yield (%) | Pool volume (mL) | Pool concentration (g/L) |
|---|---|---|---|---|
| Experiment | 21 | 79.3 | 82.5 | 5.1 |
| Model | 21 | 77.8 | 84 | 4.9 |
| Deviation (%) | N/A | 1.9 | 1.8 | 3.6 |
| Experiment | 44 | 76.6 | 179.51 | 4.72 |
| Model | 44 | 83.1 | 173.6 | 5.3 |
| Deviation (%) | N/A | 9.6 | 3.2 | 13.1 |

As indicated in Table 11 it is observed that the model predicts the PPIs for the bench top scale process within a 5% deviation range. The model prediction for the run on process scale is within a 13% deviation range. Both 5% and 13% lie well within the pre-defined acceptable ranges given in Table 10.

Further model validation activities contain comparing model prediction on process scale at varying load factor, gradient slopes, and stop collect criteria. The results of model validation are compared in 12 and 13.

Table 12

|  | Gradient (mM/CV) | Loading (g/L) | Stop collect (%) | Yield (%) | Pool volume (CV) | Pool concentration (g/L) |
|---|---|---|---|---|---|---|
| Prediction | 8 | 15 | 45 | 77.4 | 2.9 | 4.0 |
| Experiment | 8 | 15 | 45 | 72.0 | 2.8 | 3.8 |
| Deviation |  |  |  | 107.5% | 103.6% | 105.3% |
| Prediction | 5.6 | 15 | 30 | 87 | 4.6 | 2.8 |
| Experiment | 5.6 | 15 | 30 | 45 | 3.8 | 2.9 |
| Deviation |  |  |  | 115.5% | 121.0% | 92.5% |
| Prediction | 10.4 | 15 | 30 | 82.7 | 2.6 | 4.8 |
| Experiment | 10.4 | 15 | 30 | 73.5 | 2.5 | 4.4 |
| Deviation |  |  |  | 112.5% | 104.0% | 109.1% |
| Prediction | 8 | 5 | 30 |  |  |  |
| Experiment |  |  |  |  |  |  |

Table 13

|  | Gradient (mM/CV) | Loading (g/L) | Stop collect (%) | SEC HMW (%) | SEC Main (%) | Acidic (%) | Main (%) | Basic (%) |
|---|---|---|---|---|---|---|---|---|
| Prediction | 8 | 15 | 45 | 0.21 | 99.8 | 3.2 | 79.7 | 16.9 |
| Experiment |  |  |  | 0.52 | 99.5 | 3.6 | 79.7 | 16.3 |
| deviation |  |  |  |  |  |  |  |  |
| Prediction | 5.6 | 15 | 30 | 0.65 | 99.34 | 2.6 | 77.9 | 18.7 |
| Experiment |  |  |  | 0.54 | 99.5 | 3.1 | 78.9 | 18.0 |
| deviation |  |  |  |  |  |  |  |  |
| Prediction | 10.4 | 15 | 30 | 0.3 | 99.7 | 3.1 | 78.2 | 18.3 |
| Experiment |  |  |  | 0.75 | 99.25 | 3.7 | 78.9 | 17.4 |
| deviation |  |  |  |  |  |  |  |  |
| Prediction | 8 | 5 | 30 |  |  |  |  |  |
| Experiment |  |  |  |  |  |  |  |  |
| deviation |  |  |  |  |  |  |  |  |

From Tables 12 and 13, it is observed that while varying the load factor the model predictions lie well within the defined PPI ranges. However, the model seems to be less predictive regarding yield when varying the gradient slope, even though the gradient slow is close to the values the model calibration was performed with. A trend can be observed with those runs that indicates a general overestimation of yield and pool volume. A reason for the overestimation of yield can be found in the general overestimation of peak area which is connected to one model limitation which is a general challenge of mechanistic chromatography modeling. This indicates that the mass loaded onto the simulated column is higher than measured by the UV detector in the chromatogram, resulting in a peak area deviation of about 10%. The model seems to be very sensitive to protein load. More accurate feed concentrations, that determine the mass fed into the are not available for this data set.

In Table 12, portions of the charge variants in the collected pool for the main, basic, and acidic charge variants are compared between predicted and measured values. All simulated portions deviate between 0 and 16.2% from the experimentally obtained values. The values are indicating enough model accuracy for predicting charge variant profiles for varying load factors and gradient slopes. This fact suggests that the model calibration workflow is adequate for model calibration activities for industrial CEX process development.

It is worth noting that in order to transfer the UV signal from AU to SI units, a molecular weight has to be assigned to each modeled species. SI units are convenient for simulation activities. The molecular weight of the HMW species is not precisely known. Therefore, the amount of HMW species in the feed is not determined precisely as well. In a step to improve the model accuracy, the molecular weight of the HMW could be considered more precisely.

Further model accuracy improvement can be achieved by combining UV280 and UV300 measurement signals in a more integrated fashion. It is observed, that the maximum value of the main peak in some of the chromatograms presented, is very close to the upper end of the linear range of the UV280 signal. That could be a contribution for the observed deviations in chromatogram peak area and simulated peaks. Here, a data integration that is flexible in integrating UV 280 and UV300 data signals would be valuable to improve model accuracy.

## Summary and Conclusion

A model development approach was introduced for a pharmaceutical therapeutic molecule that suggests a stage wise method calibrating parts of the model in three steps to build the final model. This approach can be used to decouple transport model descriptions from the adsorption model.

A model representation was developed for a chromatographic system that contains multiple unit operations. The system describes the pathways either the sample molecules or the buffer molecules experience during a salt elution step, both of which contain valves and tubing apart from the column. In a next step the model parameters are estimated that describe the interstitial column transport. The next step taken estimates the parameters describing mass transfer into the pores. Finally, the adsorption model parameters are estimated in the last stage of model calibration. For each parameter estimation step a separate set of experiments is used.

The accuracy of the model is assessed by using experiments performed at different column scales. The model predicts the elution behavior for process robustness experiments with acceptable quality and can be used to explore the ranges of process parameters, such as gradient slope, load factor, and stop collect criteria.

With that it can be concluded that the suggested workflow entails the necessary steps for calibration of model parts for extra column volumes, intra-column transport, and adsorption behavior. Beneficial features of the methods provided herein include:

- a low number of experiments are required for the calibration

- extra column volumes are characterized, and the respective model parts can be re-used for other molecules

- by relative de-coupling of transport and adsorption model calibration the model reflects changes in equipment and further can be used across scales.

The model predicts the process at higher scale with acceptable quality but reveals general limitations. One of those limitations is that often the feed concentration of each modeled species is not known, which requires additional analytical experiments. In interest of time and effort an alternative way is suggested to identify the feed concentrations from UV chromatogram and fractionation data. No previous study has revealed this drawback of mechanistic models before or described how this issue was approached. The present disclosure provides an approach to identify the feed concentrations from fractionation data and UV chromatogram is suggested that does not require additional experiments. In interest of time and effort, a minimal set was used for model calibration and validation. A set of 12 experiments are used for the complete workflow, including determination of extra column transport model parameters to model validation. A set of 9 experiments was used for model calibration under binding conditions at one pH value, a set of 4 additional experiments was required to estimate transport model parameters for intra and extra column transport. Further model validation experiments were used. It is commonly known that the model acceptability and predictivity increases with the amount of knowledge and experiments that serve for model calibration. However, with rising experimental effort acceptability to integrate model based methods into platform process development approaches. Hence, identifying a minimal experimental set for model calibration supports the integration of chromatography modeling into industrial process development activities.

Furthermore, it has been revealed that the model is more sensitive to the amount of protein loaded than the experiments suggest. Consequently, PPIs are often over estimated. Here, two approaches can help to improve the model accuracy. First, increase the analytic effort to improve the characterization of the feed material. Second, include a parameter uncertainty estimation into the model assessment. Here, the estimated parameters could be investigated with respect to variations in the feed material concentration. Such kind of insight is valuable for to guide process optimization and process robustness experimentation.

The methods provided herein can be used and reproduced by other modelers as the solvers and algorithms are publicly available. Furthermore, the model includes a set of unit operations that are available to be used in HDF5 format and the simulations are ready to be reproduced. The results described herein can be used to further investigate and enhance model and workflow capabilities, which is a major contribution to the progressing chromatography community.

Exemplary Method

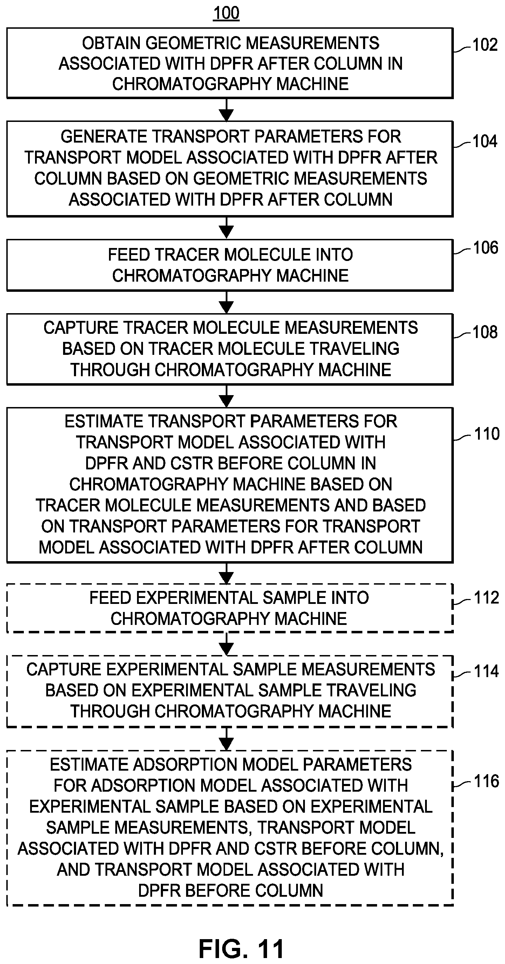

FIG. 11 illustrates a flow diagram 100 of an example method as described herein. For a chromatography machine including a first dispersed plug flow reactor (DPFR) and a continuous stirred tank reactor (CSTR) prior to a column, and a second DPFR after the column, geometric measurements associated with the second DPFR may be obtained (block 102). For instance, the geometric measurements associated with the second DPFR may include tubing diameter measurements and tubing length measurements associated with the second DPFR. These measurements may be obtained, e.g., based on measuring the tubing diameter and tubing length, and/or based on known manufacturer specifications for the chromatography machine.

Transport model parameters for a transport model associated with the second DPFR may be generated (block 104), e.g., by a processor, based on the geometric measurements. For instance, the transport model parameters may include dispersion coefficient in DPFR, volume of DPFR, cross-section area of DPFR, etc.

A tracer molecule (e.g., dextran, NaCl, or another suitable tracer molecule) may be fed (block 106) into the chromatography machine. One or more tracer molecule measurements may be captured (block 108) based on the tracer molecule traveling through the chromatography machine. For instance, the one or more tracer molecule measurements may be captured based on a chromatogram associated with the tracer molecule traveling through the chromatography machine.

Based on the transport model associated with the second DPFR and the one or more tracer molecule measurements based on the tracer molecule traveling through the chromatography machine, one or more transport model parameters for a transport model associated with the first (and second) DPFR and the CSTR may be estimated (block 110). For instance, the transport model parameters may include dispersion coefficient in DPFR, volume of DPFR, cross-section area of DPFR, volume of CSTR, etc.

Moreover, in some examples, one or more column-specific transport model parameters for a column-specific transport model associated with the column of the chromatography machine may be estimated based on the transport model associated with the first DPFR and the CSTR, the transport model associated with the second DPFR, and the one or more tracer molecule measurements based on the tracer molecule traveling through the chromatography machine. For instance, the column-specific transport model parameters may include column porosity, column dispersion, etc.

Additionally, in some examples, one or more resin transport parameters for a resin transport model associated with resin particles of the chromatography machine may be estimated based on the column-specific transport model, the transport model associated with the first DPFR and the CSTR, the transport model associated with the second DPFR, and the one or more tracer molecule measurements based on the tracer molecule traveling through the chromatography machine.

Optionally, an experimental sample may be fed (block 112) into the chromatography machine. One or more experimental measurements based on the experimental sample traveling through the chromatography machine may be captured (block 114). For instance, the one or more experimental measurements may be captured based on a chromatogram associated with the experimental sample traveling through the chromatography machine.

Based on the one or more experimental measurements based on the experimental sample traveling through the chromatography machine, the estimated one or more transport model parameters for the transport model associated with the first DPFR and the CSTR, and the transport parameters for the transport model associated with the second DPFR, one or more adsorption model parameters for an adsorption model associated with the experimental sample may be estimated (block 116), e.g., by a processor. In some examples, the column-specific transport model and/or the resin transport model may also be factors used in estimating the adsorption model parameters for the adsorption model. For instance, the adsorption model parameters may include one or more of: adsorption coefficient, desorption coefficient, characteristic charge, shielding factor, etc. In some examples, a second set of adsorption parameters for a second adsorption model associated with the experimental sample may be estimated based on ranges associated with the initially-estimated adsorption parameters.

In some examples, the experimental sample may be identified based on the adsorption model associated with the experimental sample (and/or based on the second adsorption model associated with the experimental sample).

Moreover, in some examples, the chromatography machine may include an inlet flow path including a first DPFR and a CSTR prior to an inlet flow path column, and a second DPFR after the inlet flow path column as well as a sample flow path including a first DPFR and a CSTR prior to a sample flow path column, and a second DPFR after the sample flow path column, and the method 100 may be performed for both the inlet flow path and the sample flow path.

Additionally, in some examples, blocks 112, 114, and 116 may be performed again, using a second experimental sample (e.g., distinct from the first experimental sample), but using the same estimated transport model parameters. That is, once a transport model for the chromatography machine is developed, the transport model may be used to determine adsorption model parameters for multiple experimental samples.

## Claims

1. A method, comprising:

   obtaining (102), for a chromatography machine including a first dispersed plug flow reactor, DPFR, and a continuous stirred tank reactor, CSTR, prior to a column, and a second DPFR after the column, geometric measurements associated with the second DPFR;
   generating (104), by a processor, transport model parameters for a transport model associated with the second DPFR based on the geometric measurements;
   feeding (106) a tracer molecule into the chromatography machine;
   capturing (108) one or more tracer molecule measurements based on the tracer molecule traveling through the chromatography machine; and
   estimating (110), by the processor, based on the transport model parameters for the transport model associated with the second DPFR and the one or more tracer molecule measurements based on the tracer molecule traveling through the chromatography machine, one or more transport model parameters for a transport model associated with the first DPFR and the CSTR.

2. The method of claim 1, further comprising:

   feeding (112) an experimental sample into the chromatography machine;
   capturing (114) one or more experimental measurements based on the experimental sample traveling through the chromatography machine; and
   estimating (116), by the processor, based on the one or more experimental measurements based on the experimental sample traveling through the chromatography machine, the estimated one or more transport model parameters for the transport model associated with the first DPFR and the CSTR, and the transport parameters for the transport model associated with the second DPFR, one or more adsorption model parameters for an adsorption model associated with the experimental sample.

3. The method of claim 1, wherein the geometric measurements include tubing diameter measurements and tubing length measurements associated with the second DPFR, optionally wherein the one or more tracer molecule measurements are captured based on a chromatogram associated with the tracer molecule traveling through the chromatography machine, and optionally wherein the transport model parameters include one or more of: dispersion coefficient in DPFR, volume of DPFR, cross-section area of DPFR, and volume of CSTR.

4. The method of claim 2, wherein the one or more experimental measurements are captured based on a chromatogram associated with the experimental sample traveling through the chromatography machine, optionally wherein the adsorption model parameters include one or more of: adsorption coefficient, desorption coefficient, characteristic charge, and shielding factor.

5. The method of claim 2, further comprising:
   identifying, by the processor, the experimental sample based on the adsorption model associated with the experimental sample.

6. The method of claim 2, wherein the estimating the one or more adsorption model parameters for the adsorption model associated with the experimental sample is a first estimating of a first one or more adsorption parameters for a first adsorption model associated with the experimental sample, and further comprising:
a second estimating, by the processor, of a second one or more adsorption parameters for a second adsorption model associated with the experimental sample based on a range associated with the first one or more binding parameters for the first adsorption model associated with the experimental sample, optionally wherein the method further comprises:
identifying, by the processor, the experimental sample based on the second adsorption model associated with the experimental sample.

7. The method of claim 1, wherein the first DPFR and a CSTR prior to the column, and the second DPFR after the column are part of an inlet flow path of the chromatography machine, and wherein the chromatography machine further includes a sample flow path having a first DPFR and a CSTR prior to a sample flow path column, and a second DPFR after the sample flow path column, and wherein the steps of claim 1 are further performed for the first DPFR and the CSTR prior to the sample flow path column, and the second DPFR after the sample flow path column.

8. The method of claim 2, wherein the experimental sample is a first experimental sample, and further comprising:

feeding a second experimental sample into the chromatography machine;
capturing one or more second experimental measurements based on the second experimental sample traveling through the chromatography machine; and
estimating, by the processor, based on the one or more second experimental measurements based on the second experimental sample traveling through the chromatography machine, the estimated one or more transport model parameters for the transport model associated with the first DPFR and the CSTR, and the transport parameters for the transport model associated with the second DPFR, one or more adsorption model parameters for an adsorption model associated with the second experimental sample, optionally wherein the second experimental sample is distinct from the first experimental sample.

9. The method of claim 1, further comprising estimating, by the processor, based on the transport model associated with the first DPFR and the CSTR, the transport model associated with the second DPFR, and the one or more tracer molecule measurements based on the tracer molecule traveling through the chromatography machine, one or more column-specific transport model parameters for a column-specific transport model associated with the column of the chromatography machine.

10. The method of claim 9, wherein the column-specific transport model parameters include one or more of: column porosity and column dispersion.

11. The method of claim 9, further comprising estimating, by the processor, based on the column-specific transport model, the transport model associated with the first DPFR and the CSTR, the transport model associated with the second DPFR, and the one or more tracer molecule measurements based on the tracer molecule traveling through the chromatography machine, one or more resin transport parameters for a resin transport model associated with resin particles of the chromatography machine optionally wherein the resin transport parameters include one or more of: film transport coefficient for each component and pore porosity.

12. The method of claim 2, wherein estimating one or more adsorption model parameters for an adsorption model associated with the experimental sample is further based on one or more of a column-specific transport model or a resin transport model.

13. The method of claim 1, wherein the tracer molecule is dextran, NaCl, a DNA molecule or a nanoparticle.

14. A computer system including a processor and one or more memories storing instructions that, when executed by the processor, cause the computer system, when used in combination with a chromatography machine, to perform the steps of the method of any of claims 1-13.

15. A non-transitory computer-readable storage medium storing instructions that, when executed by a processor, cause the processor, when used in combination with a chromatography machine, to perform the steps of the method of any of claims 1-13.

# EP 4 260 060 B1

**Patentansprüche**

1. Verfahren, umfassend:

   Erhalten (102) für eine Chromatographiemaschine, die einen ersten dispergierten Plug-Flow-Reaktor, DPFR, und einen Rührkesselreaktor, CSTR, vor einer Säule und einen zweiten DPFR nach der Säule beinhaltet, von geometrischen Messungen, die dem zweiten DPFR zugeordnet sind;
   Erzeugen (104) durch einen Prozessor von Transportmodellparametern für ein Transportmodell, das dem zweiten DPFR zugeordnet ist, auf Grundlage der geometrischen Messungen;
   Zuführen (106) eines Tracer-Moleküls in die Chromatographiemaschine;
   Erfassen (108) einer oder mehrerer Tracer-Molekülmessungen auf Grundlage darauf, dass das Tracer-Molekül durch die Chromatographiemaschine wandert; und
   Schätzen (110) durch den Prozessor auf Grundlage der Transportmodellparameter für das Transportmodell, die dem zweiten DPFR zugeordnet sind, und der einen oder den mehreren Tracer-Molekülmessungen auf Grundlage darauf, dass sich das Tracer-Molekül durch die Chromatographiemaschine bewegt, eines oder mehrerer Transportmodellparameter für ein Transportmodell, das dem ersten DPFR und dem CSTR zugeordnet ist.

2. Verfahren nach Anspruch 1, das ferner umfasst:

   Zuführen (112) einer Versuchsprobe in die Chromatographiemaschine;
   Erfassen (114) einer oder mehrerer Versuchsmessungen auf Grundlage darauf, dass die Versuchsprobe durch die Chromatographiemaschine wandert; und
   Schätzen (116) durch den Prozessor auf Grundlage der einen oder der mehreren Versuchsmessungen auf Grundlage darauf, dass die Versuchsprobe durch die Chromatographiemaschine wandert, der einen oder der mehreren geschätzten Transportmodellparameter für das Transportmodell, das dem ersten DPFR und dem CSTR zugeordnet ist, und der Transportparameter für das Transportmodell, das dem zweiten DPFR zugeordnet ist, eines oder mehrerer Adsorptionsmodellparameter für ein Adsorptionsmodell, das der Versuchsprobe zugeordnet ist.

3. Verfahren nach Anspruch 1, wobei die geometrischen Messungen Messungen des Rohrdurchmessers und Messungen der Rohrlänge beinhalten, die dem zweiten DPFR zugeordnet sind, wobei optional die eine oder die mehreren Tracer-Molekülmessungen auf Grundlage eines Chromatogramms erfasst werden, das dem Tracer-Molekül zugeordnet ist, das durch die Chromatographiemaschine wandert, und wobei optional die Transportmodellparameter eines oder mehrere beinhalten von: Dispersionskoeffizient in dem DPFR, Volumen des DPFR, Querschnittsfläche des DPFR und Volumen des CSTR.

4. Verfahren nach Anspruch 2, wobei die eine oder die mehreren Versuchsmessungen auf Grundlage eines Chromatogramms erfasst werden, das der Versuchsprobe zugeordnet ist, die durch die Chromatographiemaschine wandert, wobei optional die Adsorptionsmodellparameter eines oder mehrere beinhalten von: Adsorptionskoeffizient, Desorptionskoeffizient, charakteristischer Ladung und Abschirmungsfaktor.

5. Verfahren nach Anspruch 2, das ferner umfasst:
   Identifizieren der Versuchsprobe durch den Prozessor auf Grundlage des Adsorptionsmodells, das der Versuchsprobe zugeordnet ist.

6. Verfahren nach Anspruch 2, wobei das Schätzen des einen oder der mehreren Adsorptionsmodellparameter für das Adsorptionsmodell, das der Versuchsprobe zugeordnet ist, ein erstes Schätzen eines oder mehrerer erster Adsorptionsparameter für ein erstes Adsorptionsmodell, das der Versuchsprobe zugeordnet ist, umfasst und ferner umfasst:
   eine zweite Schätzung durch den Prozessor eines oder mehrerer zweiter Adsorptionsparameter für ein zweites Adsorptionsmodell, das der Versuchsprobe zugeordnet ist, auf Grundlage eines Bereichs, der dem einen oder den mehreren ersten Bindungsparametern für das erste Adsorptionsmodell zugeordnet ist, das der Versuchsprobe zugeordnet ist, wobei das Verfahren optional ferner umfasst:
   Identifizieren durch den Prozessor der Versuchsprobe auf Grundlage des zweiten Adsorptionsmodells, das der Versuchsprobe zugeordnet ist.

7. Verfahren nach Anspruch 1, wobei der erste DPFR und ein CSTR vor der Säule und der zweite DPFR nach der Säule Teil eines Einlassdurchflusswegs der Chromatographiemaschine sind und wobei die Chromatographiemaschine ferner einen Probendurchflussweg mit einem ersten DPFR und einem CSTR vor einer Probendurchflusswegsäule und einen zweiten DPFR nach der Probendurchflusswegsäule beinhaltet, und wobei die Schritte von Anspruch 1 ferner für den ersten DPFR und den CSTR vor der Probendurchflusswegsäule und den zweiten DPFR nach der Probendurchflusswegsäule durchgeführt werden.

8. Verfahren nach Anspruch 2, wobei die Versuchsprobe eine erste Versuchsprobe ist, und ferner umfasst:

Zuführen einer zweiten Versuchsprobe in die Chromatographiemaschine;
Erfassen einer oder mehrerer zweiter Versuchsmessungen auf Grundlage darauf, dass die zweite Versuchsprobe durch die Chromatographiemaschine wandert; und
Schätzen durch den Prozessor, auf Grundlage der einen oder der mehreren zweiten Versuchsmessungen auf Grundlage darauf, dass die zweite Versuchsprobe durch die Chromatographiemaschine wandert, des einen oder der mehreren geschätzten Transportmodellparameter für das Transportmodell, das dem ersten DPFR und dem CSTR zugeordnet ist, und der Transportparameter für das Transportmodell, das dem zweiten DPFR zugeordnet ist, eines oder mehrerer Adsorptionsmodellparameter für ein Adsorptionsmodell, das der zweiten Versuchsprobe zugeordnet ist, wobei sich die zweite Versuchsprobe optional von der ersten Versuchsprobe unterscheidet.

9. Verfahren nach Anspruch 1, das ferner das Schätzen durch den Prozessor auf Grundlage des Transportmodells, das dem ersten DPFR und dem CSTR zugeordnet ist, des Transportmodells, das dem zweiten DPFR zugeordnet ist, und der einen oder der mehreren Tracer-Molekülmessungen auf Grundlage darauf, dass das Tracer-Molekül durch die Chromatographiemaschine wandert, eines oder mehrerer säulenspezifischer Transportmodellparameter für ein säulenspezifisches Transportmodell, das der Säule der Chromatographiemaschine zugeordnet ist.

10. Verfahren nach Anspruch 9, wobei die säulenspezifischen Transportmodellparameter eines oder mehrere beinhalten von: Säulenporosität und Säulendispersion.

11. Verfahren nach Anspruch 9, das ferner das Schätzen durch den Prozessor auf Grundlage des säulenspezifischen Transportmodells, des Transportmodells, das dem ersten DPFR und dem CSTR zugeordnet ist, des Transportmodells, das dem zweiten DPFR zugeordnet ist, und der einen oder der mehreren Tracer-Molekülmessungen auf Grundlage darauf, dass das Tracer-Molekül durch die Chromatographiemaschine wandert, eines oder mehrerer Harztransportparameter für ein Harztransportmodell, das Harzpartikeln der Chromatographiemaschine zugeordnet ist, wobei die Harztransportparameter optional eines oder mehrere beinhalten von: Folientransportkoeffizient für jede Komponente und Porenporosität.

12. Verfahren nach Anspruch 2, wobei das Schätzen eines oder mehrerer Adsorptionsmodellparameter für ein Adsorptionsmodell, das der Versuchsprobe zugeordnet ist, ferner auf einem oder mehreren säulenspezifischen Transportmodellen oder einem Harztransportmodell basiert.

13. Verfahren nach Anspruch 1, wobei das Tracer-Molekül Dextran, NaCl, ein DNA-Molekül oder ein Nanopartikel ist.

14. Computersystem, das einen Prozessor und einen oder mehrere Speicher beinhaltet, die Anweisungen speichern, die, wenn sie von dem Prozessor ausgeführt werden, das Computersystem veranlassen, wenn es in Kombination mit einer Chromatographiemaschine verwendet wird, die Schritte des Verfahrens nach einem der Ansprüche 1-13 durchzuführen.

15. Nicht transitorisches, computerlesbares Speichermedium, das Anweisungen speichert, die, wenn sie von einem Prozessor ausgeführt werden, den Prozessor veranlassen, wenn er in Kombination mit einer Chromatographiemaschine verwendet wird, die Schritte des Verfahrens nach einem der Ansprüche 1-13 durchzuführen.

**Revendications**

1. Procédé comprenant :

l'obtention (102), relativement à une machine de chromatographie comprenant un premier réacteur à écoulement piston dispersif (DPFR, dispersed plug flow reactor) et un réacteur à cuve agitée en continu (CSTR, continuous stirred tank reactor) en amont d'une colonne, et un deuxième DPFR en aval de la colonne, de mesures géométriques associées au deuxième DPFR,
la génération (104), par un processeur, de paramètres de modèle de transport relatifs à un modèle de transport associé au deuxième DPFR en fonction des mesures géométriques,

l'introduction (106) d'une molécule traceuse dans la machine de chromatographie,

la prise (108) d'une ou plusieurs mesures par molécule traceuse reposant sur le passage de la molécule traceuse à travers la machine de chromatographie, et

l'estimation (110), par le processeur, en fonction des paramètres de modèle de transport relatifs au modèle de transport associé au deuxième DPFR et de la ou des mesures par molécule traceuse reposant sur le passage de la molécule traceuse à travers la machine de chromatographie, d'un ou plusieurs paramètres de modèle de transport relatifs à un modèle de transport associé au premier DPFR et au CSTR.

2. Procédé selon la revendication 1, comprenant en outre :

l'introduction (112) d'un échantillon expérimental dans la machine de chromatographie,

la prise (114) d'une ou plusieurs mesures expérimentales reposant sur le passage de l'échantillon expérimental à travers la machine de chromatographie, et

l'estimation (116), par le processeur, d'un ou plusieurs paramètres de modèle d'adsorption relatifs à un modèle d'adsorption associé à l'échantillon expérimental en fonction de la ou des mesures expérimentales reposant sur le passage de l'échantillon expérimental à travers la machine de chromatographie, du ou des paramètres de modèle de transport estimés relatifs au modèle de transport associé au premier DPFR et au CSTR et des paramètres de transport relatifs au modèle de transport associé au deuxième DPFR.

3. Procédé selon la revendication 1, dans lequel les mesures géométriques comprennent des mesures de diamètre de tube et des mesures de longueur de tube associées au deuxième DPFR, la ou les mesures par molécule traceuse étant éventuellement prises en fonction d'un chromatogramme associé au passage de la molécule traceuse à travers la machine de chromatographie, et les paramètres du modèle de transport comprenant éventuellement un ou plusieurs des paramètres suivants : coefficient de dispersion dans le DPFR, volume du DPFR, section transversale du DPFR et volume du CSTR.

4. Procédé selon la revendication 2, dans lequel la ou les mesures expérimentales sont prises en fonction d'un chromatogramme associé au passage de l'échantillon expérimental à travers la machine de chromatographie, les paramètres de modèle d'adsorption comprenant éventuellement un ou plusieurs des paramètres suivants : coefficient d'adsorption, coefficient de désorption, charge caractéristique et facteur de protection.

5. Procédé selon la revendication 2, comprenant en outre :
l'identification, par le processeur, de l'échantillon expérimental en fonction du modèle d'adsorption associé à l'échantillon expérimental.

6. Procédé selon la revendication 2, dans lequel l'estimation du ou des paramètres de modèle d'adsorption relatifs au modèle d'adsorption associé à l'échantillon expérimental est une première estimation d'un ou plusieurs premiers paramètres d'adsorption relativement à un premier modèle d'adsorption associé à l'échantillon expérimental, et comprenant en outre :
une deuxième estimation, par le processeur, d'un ou plusieurs deuxièmes paramètres d'adsorption relativement à un deuxième modèle d'adsorption associé à l'échantillon expérimental en fonction d'une plage associée auxdits un ou plusieurs premiers paramètres de liaison relativement au premier modèle d'adsorption associé à l'échantillon expérimental, le procédé comprenant éventuellement en outre :
l'identification, par le processeur, de l'échantillon expérimental en fonction du deuxième modèle d'adsorption associé à l'échantillon expérimental.

7. Procédé selon la revendication 1, dans lequel le premier DPFR et un CSTR en amont de la colonne, et le deuxième DPFR en aval de la colonne font partie d'un trajet d'écoulement d'entrée de la machine de chromatographie, et la machine de chromatographie comprend en outre un trajet d'écoulement d'échantillon comprenant un premier DPFR et un CSTR en amont d'une colonne de trajet d'écoulement d'échantillon, et un deuxième DPFR en aval de la colonne de trajet d'écoulement d'échantillon, les étapes de la revendication 1 étant en outre réalisées eu égard au premier DPFR et au CSTR en amont de la colonne de trajet d'écoulement d'échantillon et au deuxième DPFR en aval de la colonne de trajet d'écoulement d'échantillon.

8. Procédé selon la revendication 2, dans lequel l'échantillon expérimental est un premier échantillon expérimental, et comprenant en outre :

l'introduction d'un deuxième échantillon expérimental dans la machine de chromatographie,

la prise d'une ou plusieurs deuxièmes mesures expérimentales reposant sur le passage du deuxième échantillon expérimental à travers la machine de chromatographie, et

l'estimation, par le processeur, d'un ou plusieurs paramètres de modèle d'adsorption relatifs à un modèle d'adsorption associé au deuxième échantillon expérimental en fonction de la ou des deuxièmes mesures expérimentales reposant sur le passage du deuxième échantillon expérimental à travers la machine de chromatographie, du ou des paramètres de modèle de transport estimés relatifs au modèle de transport associé au premier DPFR et au CSTR, et des paramètres de transport relatifs au modèle de transport associé au deuxième DPFR, ledit deuxième échantillon expérimental étant éventuellement distinct du premier échantillon expérimental.

9. Procédé selon la revendication 1, comprenant en outre l'estimation, par le processeur, d'un ou plusieurs paramètres de modèle de transport spécifique à la colonne relatifs à un modèle de transport spécifique à la colonne associé à la colonne de la machine de chromatographie en fonction du modèle de transport associé au premier DPFR et au CSTR, du modèle de transport associé au deuxième DPFR et de la ou des mesures de molécules traceuses reposant sur le passage de la molécule traceuse à travers la machine de chromatographie.

10. Procédé selon la revendication 9, dans lequel les paramètres de modèle de transport spécifique à la colonne comprennent un ou plusieurs des paramètres suivants : porosité de la colonne et dispersion propre à la colonne.

11. Procédé selon la revendication 9, comprenant en outre l'estimation, par le processeur, d'un ou plusieurs paramètres de transport de résine relatifs à un modèle de transport de résine associé à des particules de résine de la machine de chromatographie, en fonction du modèle de transport spécifique à la colonne, du modèle de transport associé au premier DPFR et au CSTR, du modèle de transport associé au deuxième DPFR et de la ou des mesures par molécule traceuse reposant sur le passage de la molécule traceuse à travers la machine de chromatographie, lesdits paramètres de transport de résine comprenant éventuellement un ou plusieurs des paramètres suivants : coefficient de transport de film pour chaque composant et porosité des pores.

12. Procédé selon la revendication 2, dans lequel l'estimation d'un ou plusieurs paramètres de modèle d'adsorption relatifs à un modèle d'adsorption associé à l'échantillon expérimental s'effectue en outre en fonction d'un modèle de transport spécifique à la colonne et/ou d'un modèle de transport de résine.

13. Procédé selon la revendication 1, dans lequel la molécule traceuse est le dextrane, le NaCl, une molécule d'ADN ou une nanoparticule.

14. Système informatique comprenant un processeur et une ou plusieurs mémoires sur lesquelles sont stockées des instructions qui, lorsqu'elles sont exécutées par le processeur, amènent le système informatique, lorsqu'il est utilisé en combinaison avec une machine de chromatographie, à mettre en œuvre les étapes du procédé selon l'une quelconque des revendications 1 à 13.

15. Support de stockage non transitoire lisible par ordinateur sur lequel sont stockées des instructions qui, lorsqu'elles sont exécutées par un processeur, amènent le processeur, lorsqu'il est utilisé en combinaison avec une machine de chromatographie, à mettre en œuvre les étapes du procédé selon l'une quelconque des revendications 1 à 13.

FIG. 1A

Hold up begins **here** for all buffers except for elution

Hold up begins **here** for Protein loaded from the sample pump. Protein is primed with syringe and FILLS a pump, so pump hold up is neglected

Hold up begins **here** for elution. Pumps are FILLED, so pump hold up neglected

EP 4 260 060 B1

FIG. 1B

Counter ions
adsorbed to resin

Charge based interactions
between protein and resin

Na+     Na+          +     Na+    Na+          +     Na+    Na+    Na+

Counter ions shielded
by protein

FIG. 1C

EP 4 260 060 B1

**FIG. 2**

**FIG. 3**

| Stage 1: Model skid representation |
| --- |

Model calibration of process unit operations &
transport properties (tubing, valves, sensors)

| Stage 2: Capture transport & column properties |
| --- |

Model calibration of molecule transport
inside the column

| Stage 3: Capture quantitative molecule adsorption |
| --- |

Representation of molecule adsorption
behavior

## FIG. 4

EP 4 260 060 B1

| Simplified Buffer Flowpath |
| --- |

| Buffer Inlet | → | Mixing Pump |
| --- | --- | --- |

| Flowpath for buffer and feed |
| --- |

| Simplified Sample (Feed) Flowpath |
| --- |

| Sample Inlet | → | Sample Pump |
| --- | --- | --- |

| Injection Valve | → | Column | → | UV Detector | → | Conductivity meter |
| --- | --- | --- | --- | --- | --- | --- |

FIG. 5

FIG. 6

EP 4 260 060 B1

FIG. 7A

FIG. 7B

Dextran breakthrough - bypass

FIG. 8A

Dextran pulse - column

FIG. 8B

FIG. 8C

## 25g/L load - 5 mM/CV

**FIG. 9A**

## 25g/L load - 11 mM/CV

**FIG. 9B**

**25g/L load - 8 mM/CV**

FIG. 10A

**25g/L load - 8 mM/CV**

FIG. 10B

**25g/L load - 8 mM/CV**

FIG. 10C

**25g/L load - 8 mM/CV**

FIG. 10D

<u>100</u>

```
┌─────────────────────────────────────────┐
│   OBTAIN GEOMETRIC MEASUREMENTS          │─── 102
│   ASSOCIATED WITH DPFR AFTER COLUMN IN   │
│   CHROMATOGRAPHY MACHINE                 │
└─────────────────────────────────────────┘
                    │
                    ▼
┌─────────────────────────────────────────┐
│   GENERATE TRANSPORT PARAMETERS FOR      │─── 104
│   TRANSPORT MODEL ASSOCIATED WITH DPFR   │
│   AFTER COLUMN BASED ON GEOMETRIC        │
│   MEASUREMENTS ASSOCIATED WITH DPFR      │
│   AFTER COLUMN                           │
└─────────────────────────────────────────┘
                    │
                    ▼
┌─────────────────────────────────────────┐
│   FEED TRACER MOLECULE INTO              │─── 106
│   CHROMATOGRAPHY MACHINE                 │
└─────────────────────────────────────────┘
                    │
                    ▼
┌─────────────────────────────────────────┐
│   CAPTURE TRACER MOLECULE MEASUREMENTS   │─── 108
│   BASED ON TRACER MOLECULE TRAVELING     │
│   THROUGH CHROMATOGRAPHY MACHINE         │
└─────────────────────────────────────────┘
                    │
                    ▼
┌─────────────────────────────────────────┐
│   ESTIMATE TRANSPORT PARAMETERS FOR      │─── 110
│   TRANSPORT MODEL ASSOCIATED WITH        │
│   DPFR AND CSTR BEFORE COLUMN IN         │
│   CHROMATOGRAPHY MACHINE BASED ON        │
│   TRACER MOLECULE MEASUREMENTS AND       │
│   BASED ON TRANSPORT PARAMETERS FOR      │
│   TRANSPORT MODEL ASSOCIATED WITH        │
│   DPFR AFTER COLUMN                      │
└─────────────────────────────────────────┘
                    │
                    ▼
┌ ─ ─ ─ ─ ─ ─ ─ ─ ─ ─ ─ ─ ─ ─ ─ ─ ─ ─ ─ ─ ┐
│   FEED EXPERIMENTAL SAMPLE INTO          │─── 112
│   CHROMATOGRAPHY MACHINE                 │
└ ─ ─ ─ ─ ─ ─ ─ ─ ─ ─ ─ ─ ─ ─ ─ ─ ─ ─ ─ ─ ┘
                    │
                    ▼
┌ ─ ─ ─ ─ ─ ─ ─ ─ ─ ─ ─ ─ ─ ─ ─ ─ ─ ─ ─ ─ ┐
│   CAPTURE EXPERIMENTAL SAMPLE            │─── 114
│   MEASUREMENTS BASED ON EXPERIMENTAL     │
│   SAMPLE TRAVELING THROUGH               │
│   CHROMATOGRAPHY MACHINE                 │
└ ─ ─ ─ ─ ─ ─ ─ ─ ─ ─ ─ ─ ─ ─ ─ ─ ─ ─ ─ ─ ┘
                    │
                    ▼
┌ ─ ─ ─ ─ ─ ─ ─ ─ ─ ─ ─ ─ ─ ─ ─ ─ ─ ─ ─ ─ ┐
│   ESTIMATE ADSORPTION MODEL PARAMETERS   │─── 116
│   FOR ADSORPTION MODEL ASSOCIATED WITH   │
│   EXPERIMENTAL SAMPLE BASED ON           │
│   EXPERIMENTAL SAMPLE MEASUREMENTS,      │
│   TRANSPORT MODEL ASSOCIATED WITH        │
│   DPFR AND CSTR BEFORE COLUMN, AND       │
│   TRANSPORT MODEL ASSOCIATED WITH        │
│   DPFR BEFORE COLUMN                     │
└ ─ ─ ─ ─ ─ ─ ─ ─ ─ ─ ─ ─ ─ ─ ─ ─ ─ ─ ─ ─ ┘
```

FIG. 11

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KUMAR, V. et al.** Mechanistic modeling of ion-exchange process chromatography of charge variants of monoclonal antibody products. *Journal of Chromatography A*, 2015
- **SHEKHAWAT, L. K. et al.** An overview of mechanistic modeling of liquid chromatography. *Preparative Biochemistry and Biotechnology*, 2019
- **MONTESINOS-CISNEROS, R. M. et al.** Breakthrough performance of linear-DNA on ion-exchange membrane columns. *Bioprocess and Biosystems Engineering disclose background art.*, 2006